# EUROPÄISCHE PATENTSCHRIFT

(11) **EP 2 672 301 B1**
(45) Veröffentlichungstag und Bekanntmachung des Hinweises auf die Patenterteilung: **07.05.2025**
(21) Anmeldenummer: 12171190.7
(22) Anmeldetag: 07.06.2012
(51) Int. Cl.: G02B 6/38

(54) **STECKVERBINDUNG**
CONNECTOR
CONNECTEUR À FICHES

(43) Veröffentlichungstag der Anmeldung: 11.12.2013
(73) Patentinhaber: Diamond SA, 6616 Losone (CH)
(72) Erfinder: Coggi, Victor, 6616 Losone (CH); Minazzi, Maurizio, 21010 Germignaga (IT)
(74) Vertreter: Hepp Wenger Ryffel AG

(56) Entgegenhaltungen:
- EP-A1- 0 538 089
- EP-A1- 0 916 978
- EP-A1- 1 925 958
- EP-A2- 0 338 727
- EP-A2- 0 570 652
- WO-A1-02/071122
- JP-A- H0 412 808
- JP-A- H0 611 628
- US-A- 6 142 676
- US-A1- 2005 058 402
- US-A1- 2006 204 200
- US-A1- 2009 185 778
- US-A1- 2011 200 294

## Beschreibung

Die Erfindung betrifft ein Steckerteil sowie ein Buchsenteil für eine Steckerverbindung, insbesondere für eine Steckverbindung optischer Kabel, gemäß dem Oberbegriff des Anspruchs 1, sowie eine Steckverbindung.

Im Gegensatz zu elektrischen Steckverbindungen können bei optischen Steckverbindungen bereits geringe Verschmutzungen zu einer Übertragungsdämpfung führen, da Glasfasern mit kleinsten Querschnitten stirnseitig aufeinander ausgerichtet werden müssen. Es wurden daher bereits Schutzvorrichtungen bei Steckerteilen vorgeschlagen, mit denen Steckerstifte bei nicht eingesteckten Steckerteilen geschützt werden können.

Beispielsweise beschreibt EP 0 570 652 A2 eine Steckverbindung für Lichtwellenleiter, bei welcher der Steckerstift des Steckerteils von einem Deckel geschützt ist, welcher beim linearen Einschieben des Steckerteils in das Buchsenteil geöffnet wird. Zu diesem Zweck ist das Buchsenteil mit einer Steuerbahn, beispielsweise in der Form von Führungsnuten versehen, welche zum Öffnen des Deckels mit diesem zusammenwirken. Beim Zurückziehen des Steckerteils wird der Deckel mit Hilfe der Steuerbahn wiederum geschlossen. Eine Abziehsicherung des Steckerteils erfolgt über Rastklinken des Buchsenteils, welche am Steckerteil verrasten. Ein Wippenhebel des Steckerteils erlaubt das Lösen der Verrastung durch Fingerdruck vor einem Abziehen.

Während diese Lösung im Innenbereich eine zufrieden stellende Anwendung ermöglicht, ist ein Schutz der empfindlichen optischen Elemente bei einer Anwendung im Aussenbereich nicht ausreichend gewährleistet. Zudem ist z.B. das Mittel zum Lösen der Verrastung nur wenig robust und die Handhabung zum Abziehen des Steckerteils erfordert eine vergleichsweise diffizile Manipulation. Gerade bei Feldanwendungen im Aussenbereich kann dies nachteilig sein.

EP 0 916 978 A1 beschreibt eine optische Einschub-Steckverbindung mit einer Steckeranordnung und einem Buchsenteil. Die Stirnseite des Steckergehäuses ist mit einem Schutzdeckel verschlossen, der erst beim Einsteckvorgang aufgeschwenkt und zurückgeschoben wird. Beim Ausziehen des Steckerteils aus dem Buchsenteil wird der Schutzdeckel wieder in seine Schließposition gepresst.

WO 2011/066339 A1 beschreibt eine Steckverbindung für die Anwendung im Aussenbereich, bei welcher die Steckverbindung von einer Umkapselung geschützt ist. Die Steckverbinder können dabei bekannte Steckerteile umfassen, welche in einem Gehäuse untergebracht werden, welches mit einer Überwurfmutter an einem entsprechenden Buchsenteil verriegelt werden kann.

Während diese Lösung eine robuste Steckverbindung ermöglicht, ist die Konstruktion aufwändig. Neben den ohnehin erforderlichen Stecker- und Buchsenteilen (hier und im Folgenden gemeinsam: Steckverbinder) sind zudem aufwändige Gehäuseteile und zusätzliche Schraubverschlüsse erforderlich, weshalb diese Lösung wirtschaftlich ungünstig erscheint. Nicht zuletzt ist eine Handhabung wenig komfortabel und die Steckerstifte sind bei abgezogenem Steckerteil exponiert.

Es ist daher eine Aufgabe der Erfindung, Steckverbinder für eine Steckverbindung der eingangs genannten Art zu schaffen, bei welchen die Nachteile des Standes der Technik überwunden sind. Insbesondere ist es eine Aufgabe der Erfindung, Steckverbinder zu schaffen, welche einfach in der Konstruktion sind und eine einfache und zuverlässige Handhabung gewährleisten. Eine weitere Aufgabe ist es, die Steckverbinder dabei robust und für eine Anwendungen im Aussenbereich geeignet zu gestalten, wobei die Steckerstifte zuverlässig vor Verunreinigungen, Spritzwasser und mechanischen Einflüssen geschützt sind.

Diese Aufgaben werden erfindungsgemäss von einem Steckerteil mit den Merkmalen des Anspruchs 1 gelöst. Anspruch 1 betrifft ein Steckerteil für eine Steckverbindung, insbesondere für eine Steckverbindung optischer Leiter, umfassend ein Steckergehäuse, in welchem ein Steckereinsatz mit wenigstens einem Steckerstift zur Aufnahme eines Leiters, insbesondere eines optischen Leiters, angeordnet ist. Dabei ist das Steckerteil in ein entsprechend ausgebildetes Buchsenteil in einer Einsteckrichtung einsteckbar und umfasst ein Verriegelungsmittel zur lösbaren Verriegelung des Steckerteils im Buchsenteil. Weiter weist das Steckerteil ein Entriegelungsmittel auf, über welches die Verriegelung des Verriegelungsmittels am Buchsenteil lösbar ist. Das Steckerteil umfasst eine Schutzvorrichtung zum Schutz der Stirnseite des Steckerstifts, welche Schutzvorrichtung aus einer Schliessposition mit verdeckter Stirnseite in eine Öffnungsposition mit freiliegender Stirnseite bewegbar ist, wobei die Schutzvorrichtung durch Einbringen des Steckerteils in das Buchsenteil durch Zusammenwirken mit dem Buchsenteil aus der Schliessposition in die Öffnungsposition bewegbar ist. Dabei weist die Schutzvorrichtung bevorzugt wenigstens ein Steuerelement auf, welches beim Einstecken mit dem Buchsenteil zusammenwirken kann bzw. zusammenwirkt, um die Schutzvorrichtung aus der Schliessposition in die Öffnungsposition zu bringen. Die Erfindung zeichnet sich dadurch aus, dass das Entriegelungsmittel im Wesentlichen längs der Einsteckrichtung verschiebbar am Steckergehäuse gelagert ist, wobei das Entriegelungsmittel derart mit dem Verriegelungsmittel zusammenwirken kann, dass bei einer Längsverschiebung des Entriegelungsmittels bezüglich des Steckergehäuses in Richtung entgegen der Einsteckrichtung eine durch das Verriegelungsmittel erreichte Verriegelung lösbar ist. Einsteckrichtung bezeichnet hierbei eine Richtung, in welcher das Steckerteil bei vorgesehenem Gebrauch in ein entsprechendes Buchsenteil eingesteckt wird. In der Regel sind Steckerteile länglich ausgebildet, wobei die Steckerlängsrichtung mit der Einsteckrichtung zusammenfällt.

Ein Bereich "vorne" und ein Bereich "hinten" bezieht sich im Folgenden, sofern nicht anderweitig definiert, auf die Einsteckrichtung, wobei "vorne" einen in Einsteckrichtung vorderen Bereich bzw. eine Richtung in Einsteckrichtung bezeichnet.

Durch das erfindungsgemässe Zusammenwirken des Entriegelungsmittels mit dem Verriegelungsmittel wird eine so genannte Push-Pull-Funktion bereitgestellt. Beim Einschieben des Steckerteils in das Buchsenteil erfolgt automatisch eine Verriegelung am Buchsenteil, während beim Ausbringen durch Ziehen am Entriegelungsmittel automatisch eine Entriegelung erfolgt. Selbstverständlich kann zusätzlich eine Sperrvorrichtung vorgesehen sein, mit welcher die Entriegelungsfunktion gesperrt werden kann, sodass die Steckverbindung zusätzlich gegen ein ungewolltes Abziehen gesichert ist.

Es versteht sich, dass Entriegelungsmittel und Verriegelungsmittel grundsätzlich direkt oder indirekt, d.h. über wenigstens ein weiteres Bauteil, zusammenwirken können. Bevorzugt wirkt das Entriegelungsmittel jedoch direkt mit dem Verriegelungsmittel zusammen, da auf diese Weise die Anzahl erforderlicher Bauteile reduziert werden kann. Mit der so vereinfachten Konstruktion ist im Allgemeinen auch eine robustere Bauweise möglich.

Bevorzugt weist das Verriegelungsmittel wenigstens eine Rastzunge auf, insbesondere aus Metall, welche mit einem Befestigungsabschnitt am Steckergehäuse befestigt ist. Die Rastzunge weist ein freies Rastende auf, welches sich bevorzugt in Einsteckrichtung nach vorne erstreckt und mit Vorteil einen Rastvorsprung aufweist, welcher vom Steckergehäuse weggerichtet ist. Der Rastvorsprung kann z.B. durch Abwinkelungen der Rastzunge gebildet sein. Alternativ kann das Rastende selbst eine Rastkante bereitstellen und es versteht sich, dass sich je nach Erfordernis das freie Ende der Rastzunge auch nach hinten, entgegen der Einsteckrichtung erstrecken kann.

Das freie Rastende ist zur Verrastung mit einem Rastmittel am Buchsenteil vorgesehen und ausgebildet. Bevorzugt ist das freie Rastende in einer Richtung quer zur Einsteckrichtung bezüglich des Steckergehäuses, vorzugsweise federnd, beweglich. Der Befestigungsabschnitt ist bevorzugt an einem dem Rastende gegenüberliegenden Längsende der Rastzunge ausgebildet. Die Rastzunge kann mit dem Befestigungsabschnitt z.B. eingeschlagen, eingeschnappt, verschraubt oder anderweitig am Steckergehäuse befestigt sein.

In Varianten kann das Verriegelungsmittel beispielsweise auch als Rastausnehmung ausgebildet sein, welche mit einer Rastzunge des Buchsenteils verrastbar ist. Es ist allerdings von Vorteil, wenn die beweglichen Teile des Verriegelungsmittels am einfacher zu ersetzenden Steckerteil ausgebildet sind, als an dem oft fest installierten Buchsenteil.

Mit Vorteil sind die wenigstens eine Rastzunge und das Entriegelungsmittel derart ausgebildet und wirken derart zusammen, dass durch Verschieben des Entriegelungsmittels bezüglich des Steckergehäuses entgegen der Einsteckrichtung das freie Rastende zum Steckergehäuse hin bewegbar ist. Hierzu kann ein Bereich des Rastendes mit einer, z.B. rampenförmigen, Steuerfläche versehen sein, auf welche das Entriegelungsmittel beim Zurückziehen entgegen der Einsteckrichtung aufgeleitet und so das Rastende zum Steckergehäuse hin zwingt. Beim Einstecken des Steckerteils in das Buchsenteil kann das Buchsenteil auf dieselbe Weise mit der Steuerfläche zusammenwirken, um das Rastende in eine entsprechende Rastausnehmung einzubringen. Die Steuerfläche kann gegebenenfalls am Rastvorsprung ausgebildet sein.

In Varianten kann das Rastende beim Zurückziehen des Entriegelungsmittels auch vom Steckergehäuse wegbewegt werden. Derartige Ausführungsformen sind in der Regel jedoch konstruktiv aufwändiger, um eine Verrastung mit entsprechenden Rastmittel am Buchsenteil sicherzustellen.

Bevorzugt umfasst das Verriegelungsmittel einen in Einsteckrichtung ortsfest am Steckergehäuse befestigten U-förmigen Bügel, insbesondere aus Metall, welcher zwei weitgehend gleichartige Rastzungen mit jeweils einem freien Rastende aufweist. Vorzugsweise umgreift der U-förmige Bügel das Steckergehäuse zumindest teilweise, wobei sich mit Vorteil die beiden Rastzungen mit ihren freien Rastenden auf gegenüberliegenden Seiten des Steckergehäuses in Einsteckrichtung, insbesondere längs des Steckergehäuses, nach vorne erstrecken. Damit lässt sich eine sichere Verriegelung zu beiden Seiten des Steckerteils auf konstruktiv einfache Weise sicherstellen. Es versteht sich, dass in Varianten z.B. auch zwei separate Rastzungen zu beiden Seiten des Steckergehäuses angeordnet sein können, welche nicht über einen Bügel miteinander verbunden sind. Die konstruktiven Vorteile einer einteiligen Variante erschliessen sich aber unmittelbar.

Mit Vorteil ist das Entriegelungsmittel als Schiebehülse ausgebildet, welche das Steckergehäuse ganz oder teilweise umgreift. Sofern die wenigstens eine Rastzunge vorhanden ist, ist diese bevorzugt zwischen Schiebehülse und Steckergehäuse angeordnet und ragt mit ihrem Rastende zumindest teilweise durch eine in einer Seitenwand der Schiebehülse ausgebildete Ausnehmung hindurch, im Wesentlichen quer zur Einsteckrichtung nach aussen überstehend. Sofern ein Rastvorsprung an der Rastzunge ausgebildet ist, steht bevorzugt der Rastvorsprung nach aussen über.

Im Falle zweier Rastzungen sind diese bevorzugt spiegelbildlich an den gegenüberliegenden Seiten des Steckergehäuses angeordnet. Die Schiebehülse weist in diesem Fall für jedes Rastende bzw. für jeden Rastvorsprung eine entsprechende Ausnehmung an gegenüber liegenden Seitenwänden auf.

In Varianten kann die Rastzunge z.B. mit dem freien Rastende auch in Einsteckrichtung über die Schiebehülse hinausragen, sodass keine Ausnehmungen an der Schiebehülse vorhanden zu sein brauchen. In diesem Fall ist die Rastzunge in der Regel jedoch weniger gut geschützt, was insbesondere bei Aussenanwendungen gesamthaft eine geringere Robustheit des Steckerteils zur Folge haben kann.

Um eine Rückstellung des Entriegelungsmittel in eine Ruheposition sicherzustellen, ist das Entriegelungsmittel mit Vorteil in Einsteckrichtung vorgespannt und über einen Anschlag gefedert am Steckergehäuse abgestützt. Bevorzugt ist der Anschlag dabei als separates Bauteil und bei Bedarf abnehmbar am Steckergehäuse befestigt. Damit ist sichergestellt, dass das Entriegelungsmittel bei Abwesenheit äusserer Kräfte immer in die Ruheposition zurückgestellt wird, aus welcher es zum Lösen einer Verriegelung entgegen der Einsteckrichtung nach hinten verschoben werden kann.

Der abnehmbarer Anschlag hat den Vorteil, den Zusammenbau des Steckerteils zu vereinfachen, indem z.B. das als Schiebehülse ausgebildete Entriegelungsmittel auf das Steckergehäuse aufgeschoben, mit einer Feder versehen und durch den Anschlag fixiert werden kann. Es versteht sich, dass das Entriegelungsmittel auch ohne Vorspannung am Steckergehäuse gelagert sein kann, wobei es in diesem Fall z.B. manuell in die Ruheposition zurückgestellbar ist.

Das Entriegelungsmittel ist in der Ruheposition bezüglich des Steckergehäuses bevorzugt bis zu einem den Verschiebeweg begrenzenden vorderen Anschlag, welcher insbesondere gehäusefest angeordnet ist, ganz nach vorne verschoben.

Das vorliegend beschriebene Verriegelungsmittel sowie das Entriegelungsmittel, insbesondere gemeinsam, können mit Vorteil auch losgelöst von den übrigen Aspekten der Erfindung bei einer Vielzahl von Steckerteilen allgemeiner Art mit Vorteil zur Anwendung kommen.

Erfindungsgemäß ist eine zweite Offnungsposition der Schutzvorrichtung vorgesehen, in welcher die Schutzvorrichtung in Abwesenheit von äusseren Kräften verbleibt. Dies hat den Vorteil, dass die Schutzvorrichtung z.B. für Manipulationen am Steckereinsatz bzw. an den Steckerstiften in die zweite Offnungsposition gebracht werden kann. Dabei ist die erste Öffnungsposition verschieden von der zweiten Öffnungsposition ausgebildet, sodass beim Abziehen des Steckerteils aus dem Buchsenteil die Schutzvorrichtung nicht in der zweiten Offnungsposition verbleiben kann. Die Schutzvorrichtung ist derart ausgebildet, dass das vorgesehene Zusammenwirken mit dem Buchsenteil beim Einstecken oder Abziehen verhindert, dass die Schutzvorrichtung in die zweite Öffnungsposition gelangt.

Es versteht sich, dass die Schutzvorrichtung auch nur eine Öffnungsposition aufweisen kann, in welchem Fall für Manipulationen am Steckerstift z.B. eine separate Arretierung der ersten Öffnungsposition vorgesehen sein kann.

Erfindungsgemäß umfasst die Schutzvorrichtung eine Verschlussklappe, welche insbesondere als Kappe ausgebildet ist, die in der Schliessposition als Abschluss einer stirnseitigen Öffnung eines Innenraums des Steckergehäuses gegen das Steckergehäuse pressbar ist. Im Innenraum ist der Steckereinsatz mit den darin aufgenommenen Steckerstiften angeordnet. Die stirnseitige Öffnung ist in Einsteckrichtung vorne am Steckergehäuse ausgebildet. In Varianten kann die Schutzvorrichtung beispielsweise auch als z.B. rolladenartiger Schieber ausgebildet sein, mit welchem die Öffnung nur durch eine Verschiebung verschliessbar ist.

Bevorzugt ist an der Verschlussklappe ein Dichtungselement vorhanden, welches den durch die Verschlussklappe erreichten Abschluss des Innenraums gegen Schmutz und/oder Feuchtigkeit abdichtet. Alternativ kann das Dichtelement auch am Steckergehäuse ausgebildet sein, beispielsweise in einer Nut an der vorderen Stirnseite des Steckergehäuses. Bevorzugt ist das Dichtelement als O-Ring aus einem geeigneten Dichtmaterial wie z.B. einem Dichtungsgummi ausgebildet. Die O-Ringform kann dabei an die spezifische Form des Steckergehäuses und/oder der Verschlusskappe angepasst sein. Je nach Anwendung braucht auch kein Dichtungselement vorgesehen zu sein.

Erfindungsgemäß ist die Verschlussklappe über ein in einer Führungskulisse des Steckerteils geführtes Führungselement schwenkbar und verschiebbar am Steckerteil gelagert. Die Verschlussklappe umfasst bevorzugt wenigstens ein Steuerelement, welches bei Einstecken des Steckerteils mit einer Steuerfläche des Buchsenteils derart zusammenwirken kann bzw. zusammenwirkt, sodass die Verschlussklappe beim Einstecken aus der Schliessposition in die erste Öffnungsposition bringbar ist.

Die Führungskulisse am Steckerteil erstreckt sich dabei bevorzugt weitgehend in Einsteckrichtung längs des Steckergehäuses und weist mit Vorteil in einem vorderen Bereich einen Anschlag auf, an welchem das Führungselement in der Schliessposition anliegt.

Bei gleichzeitiger Verschiebbarkeit und Schwenkbarkeit der Verschlussklappe kann diese auf vorteilhafte Weise in einer überlagerten Verschiebe- und Schwenkbewegung von der Schliessposition in die erste Öffnungsposition bewegt werden. Insbesondere kann die Verschlussklappe aus der Schliessposition geschwenkt und gleichzeitig parallel zu einer als Oberseite bezeichneten Seitenfläche des Steckergehäuses nach hinten verschoben werden. In der ersten Öffnungsposition ist die Verschlussklappe bevorzugt weitgehend parallel zur Oberseite ausgerichtet und bezüglich des Steckergehäuses nach hinten verschoben.

Bevorzugt sind zwei Führungskulissen am Steckergehäuse vorgesehen, welche auf gegenüberliegenden Seiten und im Wesentlichen spiegelbildlich ausgebildet sind. In diesem Fall weist die Verschlussklappe auch zwei entsprechend angeordnete Führungselemente auf, welche in jeweils eine der Führungskulissen eingreifen.

Mit Vorteil weist die Führungskulisse bezüglich der Führungsrichtung zueinander versetzte Abschnitte auf, sodass die Verschlussklappe beim Verschieben, bevorzugt zwangsgesteuert, zumindest im Bereich des Führungselements zum Steckergehäuse hin oder von diesem weg bewegbar ist. Damit lässt sich ein für den Übergang von der Schliessposition in die erste Öffnungsposition erforderlicher Platzbedarf der Verschlussklappe minimieren, sodass das Buchsenteil möglichst platzsparend ausgebildet sein kann. Bevorzugt ist ein hinterer Abschnitt bezüglich der Oberseite gegenüber dem vorderen Abschnitt abgesenkt, dass die Verschlussklappe in der ersten Öffnungsposition, wenigstens im Bereich des Führungselements, näher am Steckergehäuse angeordnet ist, als im vorderen Abschnitt. Es versteht sich, dass bei ausreichendem Platz im Buchsenteil die Führungskulisse auch geradlinig ausgebildet sein kann.

Erfindungsgemäß umfasst das Steckerteil eine Rückstellvorrichtung für die Verschlussklappe, welche bevorzugt ein in Einsteckrichtung mit einer Federkraft beaufschlagtes Schubelement umfasst. Die Rückstellvorrichtung wirkt derart mit der Verschlussklappe zusammen, dass die Verschlussklappe in Abwesenheit von äusseren Kräften aus der ersten Öffnungsposition in die Schliessposition zurückstellbar ist oder zurückgestellt wird.

Die Rückstellvorrichtung wirkt bevorzugt derart mit der Verschlussklappe zusammen, dass diese in der Schliessposition, gegebenenfalls in der Führungskulisse ganz nach vorne verschoben, auf die stirnseitige Öffnung gepresst ist. Dies kann über einen entsprechend ausgebildeten Federnocken der Verschlussklappe erreicht werden, welcher eine Steuerfläche aufweist, die mit dem Schubelement zusammenwirkt.

Das Schubelement wirkt derart mit der Schutzvorrichtung zusammen, dass die Rückstellvorrichtung die Schutzvorrichtung arretiert, wenn diese in der zweiten Öffnungsposition ist. Die zweite Offnungsposition ist durch im Wesentlichen reines Verschwenken aus der Schliessposition erreichbar. Hierzu kann der Federnocken derart ausgebildet sein, dass zwischen der Schliessposition und der zweite Öffnungsposition ein Totpunkt bezüglich der Schwenkbewegung der Verschlussklappe besteht.

Bevorzugt ist der Steckereinsatz in Einsteckrichtung mit einer Federkraft beaufschlagt am Steckergehäuse abgestützt. So können mehrere Steckerstifte auf einfache Weise gleichzeitig mit einer Federkraft beaufschlagt werden, um eine gute Steckerverbindung sicherzustellen. Es versteht sich, dass dabei die einzelnen Steckerstifte über zusätzliche Federelemente am Steckereinsatz abgestützt sein können, um individuelle Unregelmässigkeiten auszugleichen. Eine gesamte Anpresskraft der einzelnen Steckerstifte ergibt sich so aus einer Kombination der Federkräfte vom Gehäuse auf den Steckereinsatz und von diesem auf die individuellen Steckerstifte selbst.

Bevorzugt ist der Steckereinsatz zur Aufnahmen von mehreren, insbesondere von vier, Steckerstiften ausgebildet, wobei vorzugsweise mehrere Steckerstifte, bevorzugt vier, im Steckereinsatz angeordnet sind. Es versteht sich, dass der Steckereinsatz dabei Steckerstifte für elektrische und/oder optische Leiterverbindungen aufnehmen kann, sodass sich gesamthaft ein so genannter Hybridstecker ergibt.

Mit Vorteil sind bei gerader Anzahl von Steckerstiften im Steckereinsatz die Steckerstifte hälftig als männliche und hälftig als weibliche Steckerstifte ausgebildet. "Männlich" bezeichnet hierbei ein steckerartiges Element während "Weiblich" ein buchsenartiges Element bezeichnet. Mit anderen Worten ist der Steckereinsatz bevorzugt derart mit Steckerstiften bestückt, dass sich gesamthaft ein hermaphroditischer Steckereinsatz ergibt.

Der vorliegend beschriebene Steckereinsatz und dessen Lagerung im Steckergehäuse sowie die Anordnung und Ausbildung der einzelnen Steckerstifte können auch losgelöst von den übrigen Aspekten der Erfindung bei einer Vielzahl von Steckerteilen allgemeiner Art mit Vorteil zur Anwendung kommen.

Um eine auch für Aussenanwendungen geeignete Steckverbindung zu ermöglichen, weist das Steckerteil ein zum Verschluss einer Einstecköffnung des Buchsenteils ausgebildetes Abschlussmittel auf. Das Abschlussmittel verschliesst die Einstecköffnung bei vollständig in das Buchsenteil eingestecktem Steckerteil. Bevorzugt ist das Abschlussmittel als eine das Steckergehäuse in einer Ebene senkrecht zur Einsteckrichtung ganz oder teilweise umlaufende Rippe ausgebildet. Ein Aussenumriss der Rippe in dieser Ebene ist dabei der Einstecköffnung entsprechend ausgebildet.

Bevorzugt ist ein Dichtelement am Abschlussmittel derart angeordnet, dass die Einstecköffnung des Buchsenteils durch das Abschlussmittel mit dem Dichtelement gegen Schmutz und/oder Feuchtigkeit abdichtbar ist. Das Dichtelement kann dabei als O-Ring aus einem geeigneten Dichtmaterial wie z.B. einem Dichtgummi gefertigt sein. Das Dichtelement kann zur Abdichtung in eingestecktem Zustand gegen eine Innenwand oder gegen ein speziell dafür vorgesehenes Element des Buchsenteils gepresst sein. Bei Innenanwendungen braucht allerdings oft kein Dichtelement oder überhaupt kein Abschlussmittel vorgesehen zu sein, da ein Verschmutzung oder Benetzung der Steckverbindung mit ausreichender Sicherheit ausgeschlossen werden kann.

Mit Vorteil ist das Abschlussmittel derart am Steckerteil ausgebildet, dass die Verriegelungsvorrichtung vollständig in einem Bereich, welcher bezüglich der Einsteckrichtung hinter dem Abschlussmittel liegt, am Steckerteil angeordnet ist. Auf diese Weise braucht das Abschlussmittel keine Durchtritte für die Verriegelungsvorrichtung aufzuweisen, sodass ein im Wesentlichen durchgehender dichtender Abschluss der Einstecköffnung erreicht werden kann.

Bevorzugt weist das Steckerteil ein Kodierungsmittel auf, welches mit Kodierungsmitteln am Buchsenteil zusammenwirken kann. Das Kodierungsmittel ermöglicht ein Einstecken des Steckerteils in das Buchsenteil aufgrund des Zusammenwirkens mit einem Kodierungsmittel am Buchsenteil nur bei entsprechender komplementärer Ausbildung der beiden Kodierungsmittel Bevorzugt ist das Kodierungsmittel am, einfach auszuwechselnden, Entriegelungsmittel ausgebildet und umfasst insbesondere in Einsteckrichtung ausgerichtete Rippen und/oder Nuten. Zudem kann das Kodierungsmittel auch farbliche Kodierungen aufweisen.

Das Kodierungsmittel ist bevorzugt bei einer der Oberseite des Steckergehäuses gegenüber liegenden Unterseite des Steckerteils am Entriegelungsmittel ausgebildet. Es versteht sich, dass das Kodierungsmittel nicht am Entriegelungsmittel angeordnet zu sein braucht und beispielsweise auch am Steckergehäuse ausgebildet sein kann, wobei in diesem Fall das ganze Steckerteil ausgewechselt werden müsste, um eine Kodierung zu ändern. Eine Anordnung an der Unterseite stellt sicher, dass für die Kodierungsmittel kein zusätzlicher Platz im Bereich der Schutzvorrichtung oder der Verriegelungsvorrichtung vorgesehen werden braucht.

Die vorliegende Erfindung betrifft eine Steckverbindung, insbesondere für optische Leiter, die ein Buchsenteil umfasst. Das Buchsenteil umfasst ein Buchsengehäuse mit einem Aufnahmeraum, in welchen das Steckerteil durch eine Einstecköffnung in einer Einsteckrichtung einbringbar ist. Das Buchsenteil weist Steuerungsmittel zum Zusammenwirken mit einer Schutzvorrichtung, insbesondere mit einem Steuerelement der Schutzvorrichtung, des Steckerteils auf, durch welche die Schutzvorrichtung beim Einstecken von einer Schliessposition in eine Öffnungsposition bewegbar ist. Die Steuerungsmittel sind dabei insbesondere im Aufnahmeraum ausgebildet. Das Buchsenteil zeichnet sich dadurch aus, dass es Rastmittel zur Verrastung der Verriegelungsvorrichtung des Steckerteils aufweist, wobei das Rastmittel bevorzugt als wenigstens eine Aussparung in einer Seitenwand des Buchsengehäuses ausgebildet ist, in welche das freie Rastende der wenigstens einen Rastzunge oder gegebenenfalls der Rastvorsprung beim Einstecken des Steckerteils einbringbar ist. Die Ausnehmung weist dabei mit Vorteil eine Rastkante auf, an welcher die Verriegelungsvorrichtung verrasten kann.

Im Aufnahmeraum kann je nach Anwendung des Buchsenteils ein Steckereinsatz mit wenigstens einem Steckerstift zur Aufnahme eines Leiters, insbesondere eines optischen Leiters, angeordnet sein. Es versteht sich, dass das Buchsenteil aber auch zur beidseitigen Aufnahme eines Steckerteils ausgebildet sein kann, als Mittelteil einer Steckverbindung mit zwei Steckerteilen. Das Buchsenteil kann als Einbaubuchse zur Montag in einem Gehäuse ausgebildet sein. Ebenso versteht es sich, dass ein Buchsenteil auch ohne weiteres direkt an ein Kabel angeschlossen sein kann.

Die Aussparung des Buchsenteils kann z.B. als vollständig durch die Seitenwand hindurch tretende Öffnung ausgebildet sein oder aber auch nur als eine Vertiefung in der Seitenwand, in welche ein entsprechendes Verrastungsmittel wie z.B. die Rastzunge der Verrieglungsvorrichtung des Steckerteils eingreifen kann. Zudem kann ein Sichtfenster am Buchsenteil vorgesehen sein, durch welches visuell verifiziert werden kann, dass das Steckerteil vollständig in das Buchsenteil eingebracht ist. Beispielsweise kann ein Bereich des Steckerteils farblich gekennzeichnet sein, wobei erst bei vollständigem Einstecken die Farbmarkierung durch das Sichtfenster am Buchsenteil erkennbar ist.

Bevorzugt umfasst das Steuerungsmittel eine an einer Innenwand des Aufnahmeraums ausgebildete Steuerfläche, an welcher ein Steuerelement der Schutzvorrichtung des Steckerteils beim Einstecken abgleiten kann. Die Steuerfläche kann dabei als Zwangsführung z.B. in einer Führungskulisse ausgebildet sein oder aber auch als einseitig wirkende Führungsfläche.

Mit Vorteil ist am Buchsenteil ein Kodierungsmittel vorhanden, wobei das Kodierungsmittel auswechselbar am Buchsenteil befestigt ist. Das Kodierungsmittel ist insbesondere als Teil einer Gehäusewand des Buchsengehäuses ausgebildet und in einer entsprechenden Ausnehmung, vorzugsweise über eine Schnappvorrichtung, in der Gehäusewand des Buchsengehäuses befestigt. Das Kodierungsmittel stellt sicher, dass ein Einstecken des Steckerteils, insbesondere eines Steckerteils mit einem Kodierungsmittel wie oben beschrieben, in das Buchsenteil aufgrund eines Zusammenwirkens mit einem Kodierungsmittel des Steckerteils nur bei entsprechender komplementärer Ausbildung der beiden Kodierungsmittel möglich ist.

Bevorzugt ist das Kodierungsmittel U-förmig ausgebildet, derart, dass es bündig mit einer Gehäuseaussenseite abschliesst, wenn es in der Ausnehmung aufgenommen ist. Bevorzugt ist das Kodierungsmittel dabei an einer Unterseite des Buchsengehäuses angebracht, d.h. einem Bereich des Buchsenteils, bei welchem die Unterseite des Steckerteils in eingestecktem Zustand angeordnet ist.

Vorzugsweise weist der Aufnahmeraum im Bereich der Einstecköffnung einen an der Innenwand umlaufenden Anschlag auf, welcher insbesondere als Anschlag für ein Abschlussmittel des Steckerteils ausgebildet ist. Auf diese Weise wird verhindert, dass das Steckerteil zu weit in das Buchsenteil eingesteckt werden kann. Bevorzugt ist der Anschlag als in einer Ebene senkrecht zur Einsteckrichtung innen umlaufende Stufe im Aufnahmeraum ausgebildet.

Bevorzugt ist am Buchsenteil ein Verschlussmittel, insbesondere eine Verschlussklappe, ausgebildet, welches über ein in einer Führungskulisse des Buchsenteils geführtes Führungselement schwenkbar und/oder verschiebbar am Buchsenteil gelagert ist. Das Verschlussmittel des Buchsenteils ist in eine Schliessposition bewegbar, in welcher es die Einstecköffnung verschliesst, und in eine Öffnungsposition bewegbar, in welcher es in einen entsprechend ausgebildeten Aufnahmeraum oder in entsprechend ausgebildeten Führungsnuten des Buchsenteils aufgenommen ist.

Im Falle einer Verschlussklappe sind Aufnahmeraum oder die Führungsnuten bevorzugt weitgehend parallel zur Führungskulisse der Verschlussklappe des Buchsenteils angeordnet. Der Aufnahmeraum oder die Führungsnuten sind bei der Einstecköffnung offen, sodass die Verschlussklappe schubladenartig in den Aufnahmeraum bzw. die Führungsnuten einschiebbar ist, wenn sie aus der Schliessposition in eine Zwischenposition geschwenkt ist. In der Zwischenposition ist die Verschlussklappe des Buchsenteils weitgehend parallel zu den Führungsnuten bzw. dem Aufnahmeraum angeordnet. Führungskulisse und Aufnahmeraum oder Führungsnuten erstrecken sich bevorzugt in Einsteckrichtung.

Die Verschlussklappe weist bevorzugt ein Dichtungselement auf. Das Dichtungselement umläuft die Verschlussklappe bevorzugt mantelseitig bezüglich der Einsteckrichtung und ist in der Schliessposition der Verschlussklappe des Buchsenteils an eine Innenwand bei der Einstecköffnung gepresst. Grundsätzlich kann das Verschlussmittel auch auf andere Weise ausgebildet sein, beispielsweise als rolladenartiger Schieber. Eine Ausbildung als Klappe hat jedoch den Vorteil einer besonders einfachen und platzsparenden Konstruktion. Es versteht sich, dass bevorzugt bei jeder Art von Verschlussmittel funktionell entsprechende Dichtungsmittel vorhanden sind.

Bei der Steckverbindung sind bevorzugt das Steckerteil und das Buchsenteil derart ausgebildet, dass bei vollständig in den Aufnahmeraum eingebrachtem Steckerteil das Entriegelungsmittel des Steckerteils zumindest teilweise zwischen Steckergehäuse und einer Seitenwand des Buchsenteils angeordnet ist. Bevorzugt ragt das Verriegelungsmittel dabei, insbesondere mit dem freien Rastende der Rastzunge, durch die Ausnehmung des Entriegelungsmittels hindurch und greift verrastend in das, bevorzugt als Aussparung in einer Seitenwand des Buchsenteils ausgebildete, Rastmittel des Buchsenteils ein. Eine Seitenwand des Entriegelungsmittels ist somit bevorzugt sandwichartig zwischen Steckergehäuse und Seitenwand des Buchsenteils angeordnet. Wie oben beschrieben ist das Entriegelungsmittel dabei bevorzugt als Schiebehülse ausgebildet.

Aus der nachfolgenden Detailbeschreibung und der Gesamtheit der Patentansprüche ergeben sich weitere vorteilhafte Ausführungsformen und Merkmalskombinationen der Erfindung.

Die zur Erläuterung der Ausführungsbeispiele verwendeten Zeichnungen zeigen schematisch:
- Fig. 1: eine äussere Schrägansicht eines erfindungsgemässen Steckerteils sowie eines Buchsenteils;
- Fig. 2: eine Explosionsdarstellung eines Steckerteils gemäss Fig. 1;
- Fig. 3a: eine Schnittansicht in Längsrichtung durch das Steckerteil sowie das Buchsenteil der Fig. 1 in einer ersten Ebene;
- Fig. 3b: eine Schnittansicht in Längsrichtung durch das Steckerteil sowie das Buchsenteil der Fig. 1 in einer weiteren Ebene;
- Fig. 3c: eine Frontalansicht von vorne auf das Steckerteil gemäss Fig. 1;
- Fig. 4a: eine Schnittansicht einer weiteren Ausführungsform eines Buchsenteils mit Verschlussklappe (geschlossen);
- Fig. 4b: eine Schnittansicht des Buchsenteils der Fig. 6 mit Verschlussklappe (teilweise geöffnet);
- Fig. 5a: Schnittansicht des Steckerteils beim Einstecken in das Buchsenteil gemäss Fig. 4a oder 4b;
- Fig. 5b: Schnittansicht analog zu Fig. 5a mit vollständig eingestecktem Steckerteil;
- Fig. 5c: Steckerteil gemäss Fig. 1 mit Verschlussklappe in zweiter Öffnungsposition.

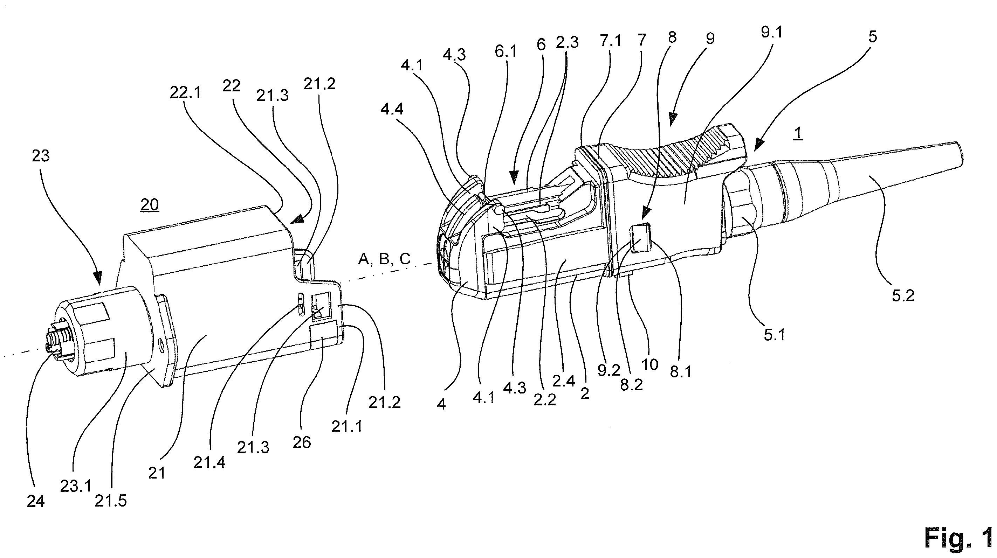

Figur 1 zeigt eine äussere Schrägansicht eines erfindungsgemässen Steckerteils 1 sowie eines Buchsenteils 20. Vorliegend ist mit "vorne " bzw. "nach vorne" eine Richtung in Einsteckrichtung bezeichnet, d.h. eine Richtung, in welcher das Steckerteil 1 in das Buchsenteil 20 eingesteckt wird. Umgekehrt bezeichnet "hinten" bzw. "nach hinten" eine Richtung entgegen der Einsteckrichtung. "oben" bzw. "nach oben" bezeichnet eine Richtung senkrecht zur Einsteckrichtung und ist vorliegend durch die Öffnungsbewegung einer Verschlussklappe des Steckerteils vorgegeben. Gemäss vorliegender Konvention wird die Verschlussklappe zum Öffnen nach oben geschwenkt. Entsprechend definiert sich "unten" als entgegen gesetzte Richtung. In Bezug auf das Buchsenteil sind diese Richtungen über das ordnungsgemäss eingesteckte Steckerteil definiert. Vorliegend fällt die Einsteckrichtung A mit einer Längsrichtung B des Steckerteils 1 zusammen. Ebenso fällt in eingestecktem Zustand eine Längsrichtung C des Buchsenteils 20 mit der Einsteckrichtung A sowie der Längsrichtung B zusammen. Es versteht sich, dass dies nicht notwendig der Fall zu sein braucht.

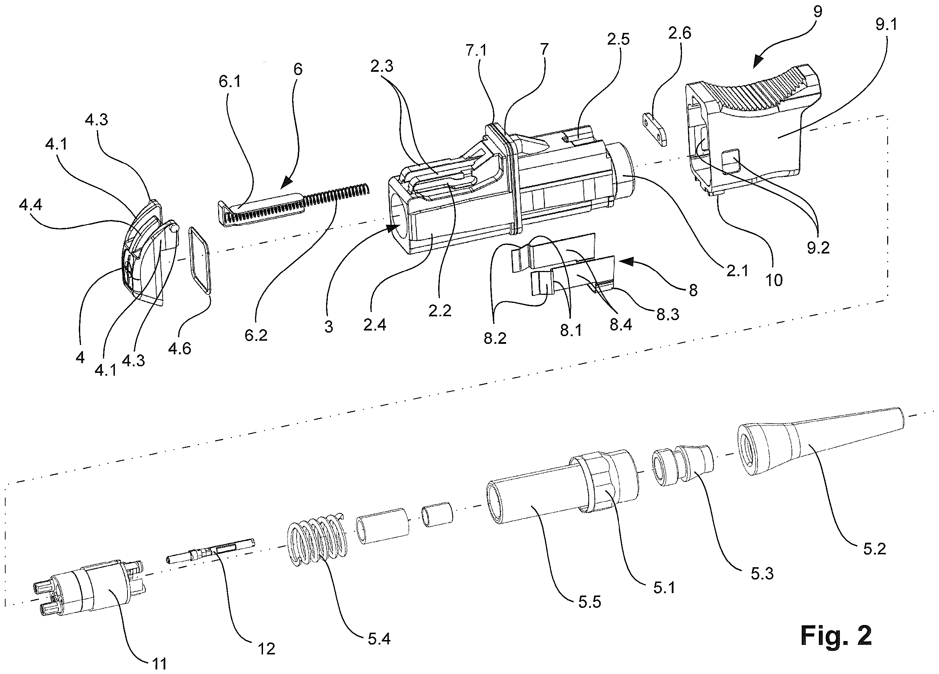

Das Steckerteil 1 umfasst ein längliches Gehäuse 2 mit einem im Wesentlichen rechteckigen Querschnitt. In einer Längsrichtung B des Gehäuses 2, d.h. vorliegend in Einsteckrichtung A, ist zur Aufnahme eines Steckereinsatzes 11 (siehe Fig. 2) ein an beiden Längsenden des Gehäuses 2 offener Hohlraum 3 ausgebildet. An einem hinteren, kabelseitigen Längsende stehen Teile einer Haltevorrichtung 5 für den Steckereinsatz 11 aus dem Hohlraum 3 nach hinten über. Die Haltevorrichtung 5 ist mit einer Überwurfmutter 5.1 an einem rohrförmigen Befestigungsstutzen 2.1 des Gehäuses 2 befestigt. Die Haltevorrichtung 5 umfasst dabei eine an die Überwurfmutter 5.1 anschliessende Knickschutztülle 5.2 zur schonenden Kabelführung in das Steckerteil 1. Ein Klemmhals 5.3 entlastet das Kabel.

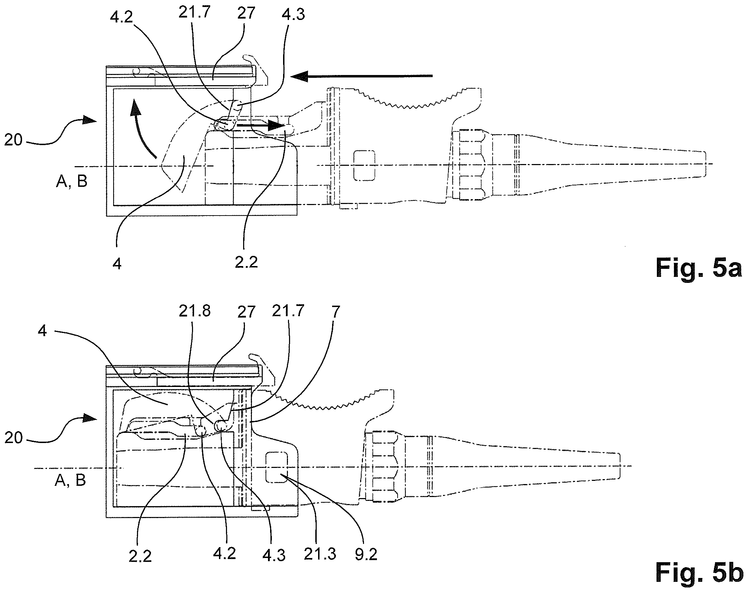

Vorne am Gehäuse 2 ist eine kappenartig ausgebildete Verschlussklappe 4 angeordnet, welche in einer Schliessstellung an einer vorderen Stirnseite des Gehäuses 2 anliegt und diese weitgehend vollständig überdeckt. Eine stirnseitige vordere Öffnung des Hohlraums 3 ist von der Verschlussklappe 4 nach aussen abgeschlossen. Die Verschlussklappe 4 weist zwei nach oben überstehende Seitenwangen 4.1 auf, an welchen jeweils ein nach innen, zum Gehäuse 2 hin, gerichteter Führungsnocken 4.2 ausgebildet ist (siehe z.B. Fig. 5a - 5c). Die Führungsnocken 4.2 sind in jeweils einer, beidseitig des Gehäuses 2 ausgebildeten Führungsnut 2.2 verschiebbar und schwenkbar geführt. In Einsteckrichtung A vorne weisen die Führungsnuten 2.2 jeweils einen Anschlag auf (siehe Fig. 2), an welchen die Führungsnocken 4.2 lagerartig anliegen wenn die Verschlussklappe 4 ganz noch vorne verschoben ist.

Aussenseitig, d.h. vom Gehäuse 2 weggerichtet, sind endseitig an den Seitenwangen 4.1 Steuernocken 4.3 ausgebildet, welche zum Schwenken oder Verschieben der Verschlussklappe 4 mit einer Steuerfläche des Buchsenteils 20 zusammenwirken können (siehe z.B. Fig. 5a - 5b). Die Steuernocken 4.3 sind von den Führungsnocken 4.2 beabstandet, sodass sich bezüglich einer von den Führungsnocken 4.2 definierten geometrischen Schwenkachse über die Steuernocken 4.3 ein Moment ausüben lässt. Steuernocken 4.3 wie Führungsnocken 4.2 sind quer zur Einsteckrichtung A ausgerichtet.

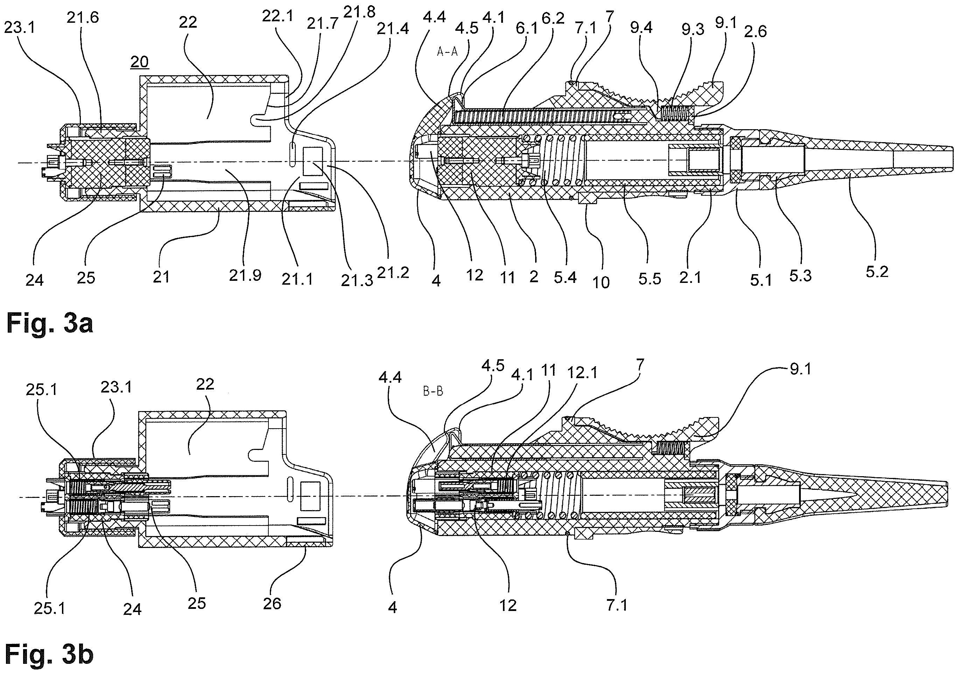

Zwischen den Seitenwangen 4.1 ist ein Federnocken 4.4 angeordnet, welcher bezüglich der geometrischen Schwenkachse der Führungsnocken 4.2 einen Hebelarm bildet und fest mit der Verschlussklappe 4 verbunden ist. Der Federnocken 4.4 ist an einer vorderen Stirnfläche eines Schubelements 6.1 einer am Gehäuse 2 ausgebildeten Rückstellvorrichtung 6 abgestützt. Das Schubelement 6.1 ist in Einsteckrichtung A verschiebbar am Steckergehäuse 2 geführt und von einer Schraubenfeder 6.2 (siehe Fig. 2 oder 3a) mit einer Federkraft nach vorne beaufschlagt. Das Schubelement 6.1 ist zwischen zwei an der Oberseite des Gehäuses 2 ausgebildeten Seitenwangen 2.3 geführt, an welchen aussenseitig die Führungsnuten 2.2 ausgebildet sind.

Das Schubelement 6.1 wirkt derart auf den Federnocken 4.4, dass die Verschlussklappe 4 zum einen mit den Führungsnocken 4.2 in den Führungsnuten 2.2 ganz nach vorne an die vorderen Anschläge der Führungsnuten 2.2 verschoben ist. Zum anderen wird die Verschlussklappe 4 aufgrund des als Hebelarm wirkenden Federnockens 4.4 um die Führungsnocken 4.2 geschwenkt und so auf die Stirnfläche des Gehäuses 2 gepresst. Die Rückstellvorrichtung 6 zwingt die Verschlussklappe 4 bei Abwesenheit von äusseren Kräften somit in eine Schliessposition (siehe hierzu Fig. 5a-5c).

Beidseitig des Gehäuses 2 ist jeweils eine in Einsteckrichtung ausgebildete Führungsleiste 2.4 ausgebildet, welche mit einer entsprechenden Führungsnut 21.9 des Buchsenteils 20 zur Zentrierung und Führung des Steckerteils 1 zusammenwirken kann (siehe Fig. 3a - 3b).

In Einsteckrichtung A etwa mittig weist das Gehäuse 2 eine Rippe 7 auf, welche sich in einer Ebene senkrecht zur Einsteckrichtung A, abgesehen von einer Unterseite des Gehäuses 2, vollständig um das Gehäuse 2 erstreckt. Die Rippe 7 dient dabei als Abschlussmittel zum Verschluss einer Einstecköffnung 22.1 des Buchsenteils 20, wenn das Steckerteil 1 vollständig in das Buchsenteil 20 eingebracht ist.

Eine Nut umläuft mantelseitig an der Rippe 7 sowie an der Unterseite des Gehäuses 2 das Gehäuse 2 vollständig. In der Nut ist ein im Wesentlichen als O-Ring ausgebildetes, vollständig umlaufendes Dichtelement 7.1 angeordnet, mit welchem eine Einstecköffnung 22.1 eines Aufnahmeraums 22 des Buchsenteils 20 durch Anpressen an eine Innenwand des Aufnahmeraums 22 abdichtbar ist. Die Rippe 7 trennt einen Steckerabschnitt, welcher vor der Rippe 7 angeordnet ist, gegen einen Halte- bzw. Griffabschnitt, welcher hinter der Rippe 7 angeordnet ist.

Im Haltebereich hinter der Rippe 7 sind ein Verriegelungsmittel 8 sowie ein Entriegelungsmittel 9 angeordnet. Das Entriegelungsmittel 9 umfasst eine Schiebehülse 9.1, welche bezüglich des Gehäuses 2 in Einsteckrichtung A verschiebbar an diesem gelagert ist. In einer Ruheposition ist die Schiebehülse 9.1 ganz nach vorne verschoben und schliesst von hinten her an die Rippe 7 an. Die Schiebehülse 9.1 umschliesst in der Ruheposition das Steckergehäuse 1 im Haltebereich weitgehend vollständig. Die Schiebehülse 9.1 ist über ein Federelement 9.3 (siehe z.B. Fig. 3a -3b) mit einer Federkraft nach vorne beaufschlagt, sodass in Abwesenheit äusserer Kräfte die Schiebehülse 9.1 in die Ruheposition gestellt wird.

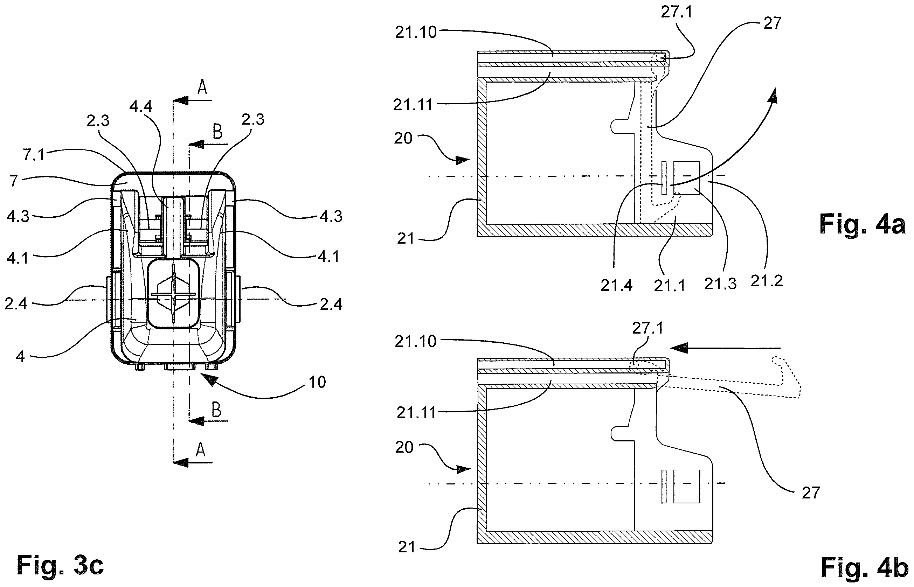

An einer Unterseite der Schiebehülse 9.1 ist in einem vorderen Bereich ein Kodierungsmittel 10 ausgebildet, welches vorliegend in Einsteckrichtung A ausgerichtete Längsrippen umfasst (siehe auch Fig. 3c). An einer Oberseite weist die Schiebehülse 9.1 eine Fingermulde mit Querrippen auf, um bei einer Handhabung einen rutschfesten Zugriff eines Benutzers zu ermöglichen.

Das Verriegelungsmittel 8 umfasst Rastvorsprünge 8.1, welche zu beiden Seiten des Gehäuses 2 angeordnet sind und im Wesentlichen quer zur Einsteckrichtung A nach aussen überstehen. Die Rastvorsprünge 8.1 sind dabei in einer Richtung quer zur Einsteckrichtung beweglich, insbesondere federnd, am Gehäuse 2 gelagert. Die Rastvorsprünge 8.1 ragen von Innerhalb der Schiebehülse 9.1 durch Ausnehmungen 9.2 in der Schiebehülse 9.1 nach aussen hindurch. Bezüglich der Einsteckrichtung A hinten weisen die Rastvorsprünge 8.1 jeweils eine Rastfläche auf, welche weitgehend senkrecht zur Einsteckrichtung A angeordnet ist. In Einsteckrichtung A nach vorne weisen die Rastvorsprünge 8.1 jeweils eine rampenförmige Steuerfläche 8.2 auf, welche keilförmig nach vorne zum Gehäuse 2 hin zusammen läuft. Die Steuerflächen 8.2 treten durch die Ausnehmung 9.2 derart hindurch, dass sie in Einsteckrichtung A hinter vorderen Kanten der Ausnehmungen 9.2 angeordnet sind. Beim Zurückziehen der Schiebehülse 9.1 bezüglich des Gehäuses 2 können die vorderen Kanten der Ausnehmungen 9.2 somit auf die jeweilige Steuerfläche 8.2 aufgleiten.

In Einsteckrichtung A vor dem Steckerteil 1 ist in Fig. 1 das Buchsenteil 20 dargestellt. Das Buchsenteil 20 weist ein Gehäuse 21 auf, in welchem der Aufnahmeraum 22 zur Aufnahme des Steckerteils 1, insbesondere des vor der Rippe 7 angeordneten Steckerabschnitts, ausgebildet ist. Der Aufnahmeraum 22 weist eine Einstecköffnung 22.1 zum Einbringen des Steckerteils 1 auf.

In einem der Einstecköffnung 22.1 in Einsteckrichtung A gegenüber liegenden Bereich weist das Buchsenteil 20 eine senkrecht zur Einsteckrichtung A ausgerichtete äussere Stirnfläche 21.5 auf. Die Stirnfläche 21.5 ist als Montagefläche zur Montage des Bucshenteils 20 z.B. in einem Gehäuse ausgebildet. Aussenseitig ist an der Stirnfläche 21.5 ein rohrförmiger Befestigungsstutzen 21.6 für eine Haltevorrichtung 23 eines Steckereinsatzes 24 ausgebildet (siehe Fig. 3a und 3b). Die Haltevorrichtung 23 umfasst eine Überwurfmutter 23.1, mit welcher der Steckerseinsatz 24 im Buchsenteil 20 gehalten ist.

Das Gehäuse 21 des Buchsenteils 20 weist in einem unten liegenden Bereich einen im Querschnitt U-förmigen Gehäusefortsatz 21.1 auf, welcher sich in Einsteckrichtung A über die Einstecköffnung 22.1 hinaus erstreckt. Der U-förmige Fortsatz 21.1 weist Seitenwangen 21.2 auf, in welchen jeweils eine Rastausnehmung 21.3 ausgebildet ist. In den Rastauausnehmungen 21.3 können die Rastvorsprünge 8.1 des Steckerteils 1 verrasten. Unterhalb der Rastausnehmungen 21.3 ist eine Aussparung im Fortsatz 21.1 ausgebildet, in welche ein auswechselbares Kodierungsmittel 29 eingesetzt ist. Das Kodierungsmittel 29 stellt sicher, dass nur ein Steckerteil 1 mit komplementär ausgebildeten Kodierungsmitteln 10 vollständig in das Buchsenteil 20 eingesteckt werden kann. In Einsteckrichtung vor den Rastausnehmungen 21.3 sind Sichtfenster 21.4 ausgebildet, durch welche z.B. zur visuellen Kontrolle nur bei ordnungsgemäss vollständig eingestecktem Steckerteil 1 die Schiebehülse 9.1 sichtbar ist.

Der U-förmige Fortsatz 21.1 ist derart ausgebildet, dass er bei vollständig in das Buchsenteil 20 eingestecktem Steckerteil 1 das Entriegelungsmittel 9, d.h. vorliegend die Schiebehülse 9.1, von unten her U-förmig umfasst. Beim Einstecken gleiten dem Steckerteil 1 zugewandte Kanten der Seitenwangen 21.2 auf die Steuerflächen 8.2 der Rastvorsprünge 8.1 auf und zwingen diese nach innen, zum Gehäuse 2 hin. Bei vollständig eingeschobenem Steckerteil 1 sind die Rastausnehmungen 21.3 in Richtung quer zur Einsteckrichtung A fluchtend mit den Ausnehmungen 9.2 angeordnet. Die Rastvorsprünge 8.1 könne somit in die Rastausnehmungen 21.3 ragen und mit den Rastflächen verrastend in diese eingreifen. Das Steckerteil 1 ist somit gegen ein unbeabsichtigtes Abziehen aus dem Buchsenteil 20 gesichert.

Wird die Schiebehülse 9.1 nach hinten verschoben, z.B. wenn ein Benutzer das Steckerteil 1 an der Schiebehülse 9.1 ergreift und entgegen der Einsteckrichtung A daran zieht, gleiten die vorderen Kanten der Ausnehmungen 9.2 der Schiebehülse 9.1 auf die jeweilige Steuerflächen 8.2 der Rastvorsprünge 8.1 auf. Die Rastvorsprünge 8.1 werden dabei nach innen, zum Gehäuse 2 hin gezwungen, womit sie aus den Rastausnehmungen 20.3 des Buchsenteils 20 ausgebracht werden. Das Steckerteil 1 ist somit entriegelt und kann aus dem Buchsenteil 20 abgezogen werden.

Figur 2 zeigt eine Explosionsdarstellung des Steckerteils 1 gemäss Fig. 1. Figur 2 zeigt insbesondere im Detail den Aufbau der Rückstellvorrichtung 6, die Führungsnuten 2.2 sowie den Aufbau des Verriegelungsmittels 8 sowie des Entriegelungsmittels 9.

Die Verschlussklappe 4 weist ein Dichtelement 4.6 auf, welches an einer der vorderen Stirnseite des Gehäuses 2 zugewandten Fläche der Verschlussklappe 4 angeordnet ist. Der durch die Verschlussklappe 4 erreichte Abschluss des Hohlraums 3 ist somit an der Stirnseite gegen ein Eindringen von Schmutz oder Feuchtigkeit abgedichtet.

Das Schubelement 6.1 der Rückstellvorrichtung 6 ist als in Einsteckrichtung ausgerichteter U-förmiger Bügel ausgebildet. Zwischen den Armen des Bügels 6.1 ist die Schraubenfeder 6.2 angeordnet. Die Schraubenfeder 6.2 ist zwischen den Seitenwangen 2.3 in Längsrichtung B nach hinten am Gehäuse 2 abgestützt.

Das Verriegelungsmittel 8 umfasst einen U-förmigen Bügel 8.3, welcher das Gehäuse 2 hinter der Rippe 7 von unten her teilweise umfasst und an diesem befestigt ist, beispielsweise eingeschnappt. Ausgehend von den Armen der U-Form strecken sich zwei Rastzungen 8.4 längs des Gehäuses 2 in Einsteckrichtung A nach vorne. An vorderen, freien Längsenden der Rastzungen 8.4 sind die Rastvorsprünge 8.1 ausgebildet. Das Gehäuse 2 weist entsprechende Aussparungen auf, in welchen der Bügel 8.3 eingeschnappt werden kann und welche den Rastzungen 8.4 die erforderliche Beweglichkeit in Richtung senkrecht zur Einsteckrichtung A bereitstellen. Die Rastzungen 8.4 sind federnd elastisch ausgebildet, sodass die Rastvorsprünge 8.1 in einer Ruhestellung in Abwesenheit von äusseren Kräften durch die Aussparungen 9.2 nach aussen gedrückt werden. Bügel 8.3 sowie Rastzungen 8.4 sind bevorzugt einstückig aus einem federnden Metall gefertigt.

Die Schiebehülse 9.1 ist von hinten her über den Bügel 8.3 sowie die Rastzungen 8.4 auf das Gehäuse 2 aufgeschoben. Der Bügel 8.3 sowie die Rastzungen 8.4 sind auf diese Weise geschützt zwischen Schiebehülse 9.1 und Gehäuse 2 angeordnet. An einer Oberseite des Gehäuses 2 ist im Haltebereich eine Aussparung 2.5 für das Federelement 9.3 vorgesehen (siehe auch Fig. 3a - 3b). Die Aussparung 2.5 ist nach hinten offen und von einem abnehmbar am Gehäuse 2 befestigten Anschlag 2.6 in dieser Richtung abgeschlossen. Das Federelement 9.3 ist über einen Mitnehmer 9.4 am Entriegelungsmittel 9.1 und über den Anschlag 2.6 am Gehäuse 2 abgestützt. Durch den abnehmbaren Anschlag 2.6 ist eine Montage des Entriegelungsmittels 9 besonders einfach.

Figur 2 zeigt weiter den Steckerseinsatz 11, welcher zur Aufnahme von vier regelmässig um die Längsrichtung B angeordneten Steckerstiften 12 ausgebildet ist (siehe hierzu auch Fig. 3a - 3b). Der Steckereinsatz 11 ist in Einsteckrichtung A verschiebbar im Hohlraum 3 angeordnet und gegenüber dem Gehäuse 2 über ein Federelement 5.4 in Richtung nach vorne mit einer Federkraft beaufschlagt. Das Federelement 5.4 ist über eine Distanzhülse 5.5 und die Überwurfmutter 5.1 am Gehäuse 2 abgestützt. Auf diese Weise ist der gesamte Steckereinsatz 11 nach vorne vorgespannt, federnd im Hohlraum 3 des Gehäuses 2 angeordnet, womit eine optimale Verbindung mit Anschlüssen des Buchsenteils 20 sichergestellt werden kann. Ein Anschlag im Hohlraum 3 verhindert, dass der Steckereinsatz 11 nach vorne aus dem Hohlraum 3 fallen kann. Die einzelnen Steckerstifte 12 sind ebenfalls mit Federelementen 12.1 versehen, über welche sie am Steckereinsatz 11 abgestützt sind. Auf diese Weise können individuelle Abweichungen ausgeglichen werden.

Figur 3a zeigt eine Schnittansicht in einer Längsmittelebene des Steckerteils 1 sowie des Buchsenteils 20 während Fig. 3b eine Schnittansicht in einer dazu parallelen, seitlich versetzten Ebene zeigt. Die beiden Ebenen sind in Fig. 3c eingezeichnet, welche eine Frontalansicht auf die vordere Stirnseite des Steckerteils 1 in Blickrichtung entgegen der Einsteckrichtung A zeigt. Figuren 3a und 3b sind im Folgenden gemeinsam beschrieben, wobei hinsichtlich des Steckerteils 1 im Wesentlichen auf die Beschreibung der Fig. 1 und 2 verwiesen wird.

An der Montagestirnseite 21.5 des Buchsenteils 20 ist der rohrförmige Befestigungsstutzen 21.6 erkennbar. Der Befestigungsstutzen 21.6 ist mit einem Aussengewinde versehen, auf welches die Überwurfmutter 23.1 aufgeschraubt ist. Die Überwurfmutter 23.1 fixiert dabei den Steckereinsatz 24 des Buchsenteils 20, welcher in Gegenrichtung an einem Anschlag im Befestigungsstutzen 21.6 abgestützt ist. Die Stirnseiten von darin aufgenommenen Steckerstiften 25 ragen in den Aufnahmeraum 22 hinein. Die Steckerstifte 25 sind über individuelle Federelemente 25.1 am Steckereinsatz 24 abgestützt.

An den gegenüberliegenden Seitenwänden des Gehäuses 21 sind innenseitig im Aufnahmeraum 22 jeweils Steuerflächen 21.7 ausgebildet. Die Steuerflächen 21.7 sind von einer Gehäuseoberseite ausgehend in Einsteckrichtung A nach vorne geneigt. Die Steuerflächen 21.7 ragen derart in den Aufnahmeraum 22 hinein, dass die Steuernocken 4.3 der Verschlussklappe 4 des Steckerteils 1 mit diesen zusammenwirken können, wenn das Steckerteil 1 in das Buchsenteil 20 eingesteckt wird. Die Steuerflächen 21.7 setzen sich in eine geradlinige Führungskulisse 21.8 fort, welche in Einsteckrichtung A ausgerichtet ist. Die Führungskulisse 21.8 ist etwa auf derselben Höhe angeordnet, wie eine vorderer Abschnitt der Führungskulissen 2.2 des Steckerteils 1, wenn dieses im Buchsenteil 20 eingesteckt ist. In Einsteckrichtung A vorne weist die Führungskulisse 21.8 einen Anschlag auf, welcher als Widerlager für die Steuernocken 4.3 der Verschlussklappe 4 dient.

An den Seitenwänden des Gehäuses 21 sind im Aufnahmeraum 22 Führungsnuten 21.9 zur Aufnahme der Führungsleiste 2.5 ausgebildet, sodass das Steckerteil 1 beim Einstecken längs diesen geführt ist. Die Führungsnuten 21.9 sowie die Führungsleisten 2.5 laufen abschnittweise nach vorne zusammen, sodass sich ein Keilsitz ergibt, wenn das Steckerteil 1 vollständig eingesteckt ist.

In der Schnittansicht ist eine der Seitenwangen 21.2 des U-förmigen Fortsatzes 21.1 mit daran ausgebildeter Rastausnehmung 21.3 und dem Sichtfenster 21.4 erkennbar. Ebenso ist erkennbar, wie das Kodierungsmittel 26 in die entsprechende Ausnehmung des Fortsatzes 21.1 eingesetzt ist. Innenseitig sind am Kodierungsmittel 26 Längsrippen ausgebildet, welche mit den Längsrippen des Kodierungsmittels 10 des Steckerteils 1 beim Einstecken zusammenwirken.

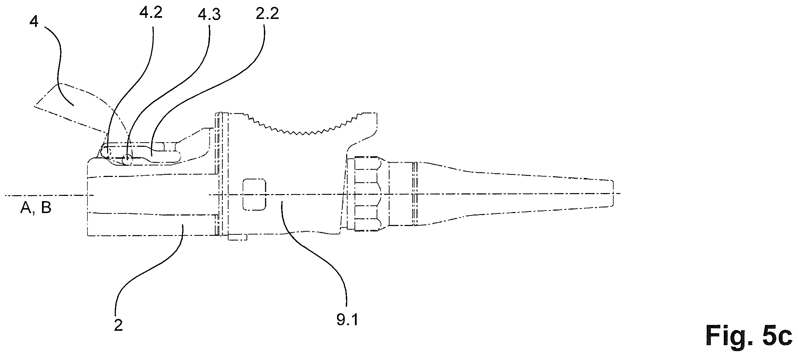

In Fig. 3a und 3b ist ein Längsquerschnitt durch den Federnocken 4.4 der Verschlussklappe 4 erkennbar. Ein äusserer Umriss des Federnockens 4.4 ist dabei als Steuerfläche ausgestaltet, welche beim Verschwenken der Verschlussklappe 4 auf der Stirnfläche des Schubelements 6.1 der Rückstellvorrichtung 6 abgeleitet. Der Umriss des Federnockens 4.4 weist dabei eine Spitze 4.5 auf, welche einen Totpunkt bezüglich der momentanen, von den Führungsnocken 4.2 bestimmten Schwenkachse definiert. Wird die Verschlussklappe 4 derart weit verschwenkt, dass der Führungsnocken 4.4 über die Spitze 4.5 hinaus auf dem Schubelement 6.1 abgeleitet, gelangt die Verschlussklappe 4 in eine zweite Öffnungsstellung. In der zweiten Öffnungsstellung wirkt das Schubelement 6.1 derart mit dem Federnocken 4.4 zusammen, dass die Verschlussklappe 4 aufgrund der Federkraft in der zweiten Öffnungsstellung verrastet ist (siehe hierzu Fig. 5c).

Figuren 4a und 4b zeigen schematisch eine weitere Ausführungsform des Buchsenteils 20, bei welcher zusätzlich eine Verschlussklappe 27 vorhanden ist.

Die Verschlussklappe 27 ist über Führungsnocken 27.1 in Führungsnuten 21.10 des Gehäuses 21 verschiebbar und schwenkbar geführt. Die Führungsnuten 21.10 sind dabei oberhalb des Aufnahmeraums 22 für das Steckerteil 1 ausgebildet und verlaufen in Einsteckrichtung A. Unterhalb der Führungsnuten 21.10 ist ein Aufnahmeraum 21.11 ausgebildet, welcher parallel zu den Führungsnuten 21.10 verläuft und in Einsteckrichtung A bei der Einstecköffnung 22.1 offen ist.

Figur 4a zeigt die Verschlussklappe 27 in einer Schliessstellung, in welcher die Einstecköffnung von der Verschlussklappe 27 verschlossen ist. Figur 4b zeigt die Verschlussklappe 27 in einer Zwischenstellung, in welcher sie nach oben geschwenkt ist (Pfeil in Fig. 4a), sodass die Verschlussklappe 27 weitgehend parallel zum Aufnahmeraum 21.11 angeordnet ist. Die Verschlussklappe 27 kann aus der Zwischenstellung in Pfeilrichtung, über die Führungsnocken 27.1 in den Führungsnuten 21.10 geführt, in den Aufnahmeraum 21.11 eingeschoben werden. Auf dieses Weise ist die Verschlussklappe 27 platzsparend und geschützt im Buchsenteil 20 aufgenommen.

Figuren 5a - 5b zeigen einen Ablauf beim Einstecken des Steckerteils 1 in das Buchsenteil 20.

Figur 5a zeigt eine Momentaufnahme, in welcher die Steuernocken 4.3 der Verschlussklappe 4 bereits auf die Steuerflächen 21.7 des Buchsenteils 20 aufgeglitten sind. Aufgrund der von den Steuerflächen 21.7 ausgeübten Gegenkraft auf die Steuernocken 4.3 ist die Verschlussklappe 4 um die Führungsnocken 4.2 geschwenkt (Pfeil) und in den Führungsnuten 2.2 des Steckerteils 1 nach hinten verschoben. Die Verschlussklappe 4 liegt dabei bei einer Übergangskante zur vorderen Stirnfläche des Gehäuses 2 an dessen Oberseite auf. Beim weiteren Einstecken gleiten die Führungsnocken 4.2 weiter in den Führungsnuten 2.2 nach hinten während die Steuernocken 4.3 von den Steuerflächen 21.7 in die Führungskulisse 21.8 gelangen.

Figur 5b zeigt das Steckerteil 1 in vollständig eingestecktem Zustand. Die Führungsnocken 4.2 sind in den Führungskulissen 2.2 ganz nach hinten verschoben während die Steuernocken 4.3 in den Führungsnuten 21.8 am vorderen Anschlag anstossen. Die Verschlussklappe 4 ist vollständig oberhalb des Steckergehäuses 2 auf dessen Oberfläche angeordnet (erste Öffnungsposition).

Die Führungskulissen 2.2 weisen einen vorderen und einen hinteren Abschnitt auf, welche gegeneinander versetzt angeordnet sind (siehe auch Fig. 1 - 2). Der hintere Abschnitt ist derart nach unten versetzt, dass die Verschlussklappe 4 über die Führungsnocken 4.2 zum Gehäuse 2 hin bewegt wird, wenn die Führungsnocken 4.2 in den hinteren Abschnitt gelangen. Damit kann eine Gesamthöhe des für die Öffnungsbewegung der Verschlussklappe 4 benötigten Platzes verringert werden.

Die Steuerfläche des Federnockens 4.4, d.h. insbesondere die Spitze 4.5, ist dabei derart gewählt, dass beim Übergang von der Schliessposition in die erste Öffnungsposition der von der Spitze 4.5 definierte Totpunkt nicht überschritten wird. Auf dieses Weise ist sichergestellt, dass beim Abziehen des Steckerteils 1 die Verschlussklappe 4 automatisch aufgrund des federbeaufschlagten Schubelements 6.1 in die Schliessposition zurückgestellt wird. Insbesondere muss auf diese Weise die Steuerfläche 21.7 bzw. die Führungskulisse 21.8 nicht zur Rückstellung ausgebildet sein, was die Konstruktion des Buchsenteils 20 wesentlich vereinfacht.

Figur 5c zeigt das Steckerteil 1 mit der Verschlussklappe 4 in der zweiten Öffnungsposition. In der zweiten Öffnungsposition ist, ausgehend von der Schliessposition, der durch die Spitze 4.5 definierte Totpunkt überschritten. Die Führungsnocken 4.2 liegen an den vorderen Anschlägen der Führungsnuten 2.2 an. In dieser Position wirkt das Schubelement 6.1 derart auf den Federnocken 4.4 (beide nicht dargestellt), dass die resultierende Hebelwirkung die Verschlussklappe 4 in der zweiten Öffnungsposition arretiert. Ein Aufliegen des Federnockens 4.4 und/oder der Seitenwangen 4.1 auf der Oberseite des Gehäuses 2 verhindert, dass die Verschlussklappe 4 weiter in Öffnungsrichtung geschwenkt werden kann.

## Patentansprüche

1. Steckerteil (1) für eine Steckverbindung, insbesondere optischer Leiter, umfassend
a) ein Steckergehäuse (2), in welchem ein Steckereinsatz (11) mit wenigstens einem Steckerstift (12) zur Aufnahme eines Leiters, insbesondere eines optischen Leiters, angeordnet ist, wobei
b) das Steckerteil (1) in ein entsprechend ausgebildetes Buchsenteil (20) in einer Einsteckrichtung (A) einsteckbar ist und
c) ein Verriegelungsmittel (8) zur lösbaren Verriegelung des Steckerteils (1) im Buchsenteil (20) umfasst und weiter
d) ein Entriegelungsmittel (9) aufweist, über welches die Verriegelung des Verriegelungsmittels (8) am Buchsenteil (20) lösbar ist, wobei
e) das Steckerteil (1) eine Schutzvorrichtung zum Schutz der Stirnseite des Steckerstifts (12) umfasst, welche Schutzvorrichtung aus einer Schliessposition mit verdeckter Stirnseite in eine erste Öffnungsposition mit freiliegender Stirnseite bewegbar ist und
f) die Schutzvorrichtung durch Einbringen des Steckerteils (1) in das Buchsenteil (20) durch Zusammenwirken mit dem Buchsenteil (20) aus der Schliessposition in die erste Öffnungsposition bewegbar ist,
wobei das Entriegelungsmittel (9) im Wesentlichen längs der Einsteckrichtung (A) verschiebbar am Steckergehäuse (1) gelagert ist, wobei das Entriegelungsmittel (9) derart mit dem Verriegelungsmittel (8) zusammenwirken kann, dass bei einer Längsverschiebung des Entriegelungsmittels (9) bezüglich des Steckergehäuses (1) im Wesentlichen in Richtung entgegen der Einsteckrichtung (A) eine durch das Verriegelungsmittel erreichte Verriegelung lösbar ist,
wobei die Schutzvorrichtung eine Verschlussklappe (4) umfasst, die in der Schliessposition als Abschluss einer stirnseitigen Öffnung eines Innenraums (3) des Steckergehäuses (2) gegen das Steckergehäuse (2) pressbar ist, wobei im Innenraum (3) der Steckereinsatz (11) mit dem wenigstens einen darin aufgenommenen Steckerstift (12) angeordnet ist,
wobei die Verschlussklappe (4) über ein in einer Führungskulisse (2.2) des Steckerteils (1) geführtes Führungselement (4.2) schwenkbar und verschiebbar am Steckerteil (1) gelagert ist,
wobei in der ersten Öffnungsposition die Verschlussklappe (4) weitgehend parallel zu einer als Oberseite bezeichneten Seitenfläche des Steckergehäuses (2) ausgerichtet und bezüglich des Steckergehäuses (2) nach hinten verschoben angeordnet ist,
**dadurch gekennzeichnet, dass**
das Steckerteil (1) eine Rückstellvorrichtung (6) für die Verschlussklappe (4) umfasst, wobei die Rückstellvorrichtung (6) mit der Verschlussklappe (4) derart zusammenwirkt, dass die Verschlussklappe (4) in Abwesenheit von äusseren Kräften aus der ersten Öffnungsposition in die Schliessposition zurückstellbar ist,
wobei die Schutzvorrichtung in eine zweite Öffnungsposition bringbar ist, in welcher die Schutzvorrichtung in Abwesenheit von äusseren Kräften verbleibt,
wobei im Falle der zweiten Öffnungsposition, die Rückstellvorrichtung (6) die Verschlussklappe (4) arretiert, wenn diese in der zweiten Öffnungsposition ist,
wobei die erste Öffnungsposition verschieden von der zweiten Öffnungsposition ausgebildet ist,
wobei die zweite Öffnungsposition durch im Wesentlichen reines Verschwenken aus der Schliessposition erreichbar ist,
wobei die Schutzvorrichtung derart ausgebildet ist, dass das vorgesehene Zusammenwirken mit dem Buchsenteil beim Einstecken oder Abziehen verhindert, dass die Schutzvorrichtung in die zweite Öffnungsposition gelangt.

2. Steckerteil gemäss Anspruch 1, **dadurch gekennzeichnet, dass** das Verriegelungsmittel (8) wenigstens eine Rastzunge (8.4) aufweist, insbesondere aus Metall, welche mit einem Befestigungsabschnitt am Steckergehäuse (2) befestigt ist und ein freies Rastende aufweist, welches sich bevorzugt in Einsteckrichtung (A) nach vorne erstreckt und mit Vorteil einen Rastvorsprung (8.1) aufweist, welcher vom Steckergehäuse (2) weggerichtet ist.

3. Steckerteil gemäss Anspruch 2, **dadurch gekennzeichnet, dass** das Entriegelungsmittel (9) und die wenigstens eine Rastzunge (8.4) derart ausgebildet sind und zusammenwirken, dass durch Verschieben des Entriegelungsmittels (9) bezüglich des Steckergehäuses (2) entgegen der Einsteckrichtung das Rastende zum Steckergehäuse (2) hin bewegbar ist.

4. Steckerteil gemäss einem der Ansprüche 2 oder 3, **dadurch gekennzeichnet, dass** das Verriegelungsmittel (8) einen in Einsteckrichtung (A) ortsfest am Steckergehäuse befestigten U-förmigen Bügel (8.3) umfasst, insbesondere aus Metall, welcher zwei weitgehend gleichartige Rastzungen (8.4) mit jeweils einem freien Rastende aufweist, wobei der U-förmige Bügel (8.3) vorzugsweise das Steckergehäuse (2) zumindest teilweise umgreift und sich insbesondere die beiden Rastzungen (8.4) auf gegenüberliegenden Seiten des Steckergehäuses (2) mit ihren freien Rastenden in Einsteckrichtung (A) nach vorne erstrecken.

5. Steckerteil gemäss einem der Ansprüche 1 bis 4, **dadurch gekennzeichnet, dass** das Entriegelungsmittel (9) als Schiebehülse (9.1) ausgebildet ist, welche das Steckergehäuse (2) ganz oder teilweise umgreift, wobei gegebenenfalls die wenigstens eine Rastzunge (8.4) zwischen Schiebehülse (9.1) und Steckergehäuse (2) angeordnet ist und mit ihrem Rastende zumindest teilweise durch eine in einer Seitenwand der Schiebehülse (9.1) ausgebildete Ausnehmung (9.2) hindurch, im Wesentlichen quer zur Einsteckrichtung (A), nach aussen übersteht, wobei gegebenenfalls der an der Rastzunge (8.4) ausgebildete Rastvorsprung (8.1) nach aussen übersteht.

6. Steckerteil gemäss einem der Ansprüche 1 bis 5, **dadurch gekennzeichnet, dass** das Entriegelungsmittel (9) in Einsteckrichtung (A) vorgespannt über einen Anschlag (2.6) gefedert am Steckergehäuse (2) abgestützt ist, wobei der Anschlag (2.6) bevorzugt als separates Bauteil und bei Bedarf abnehmbar am Steckergehäuse befestigt ist.

7. Steckerteil gemäss einem der Ansprüche 1 bis 6, **dadurch gekennzeichnet, dass** die Verschlussklappe (4) als Kappe ausgebildet ist, die in der Schliessposition als Abschluss einer stirnseitigen Öffnung eines Innenraums (3) des Steckergehäuses (2) gegen das Steckergehäuse (2) pressbar ist, wobei ein Dichtungselement (4.6) vorhanden ist, welches den Abschluss gegen Schmutz und/oder Feuchtigkeit abdichtet.

8. Steckerteil gemäss einem der Ansprüche 1 bis 7, **dadurch gekennzeichnet, dass** die Führungskulisse (2.2) bezüglich der Führungsrichtung zueinander versetzte Abschnitte aufweist, sodass die Verschlussklappe (4) beim Verschieben, bevorzugt zwangsgesteuert, zumindest im Bereich des Führungselements (4.2) zum Steckergehäuse (2) hin oder von diesem weg bewegbar ist.

9. Steckerteil gemäss einem der Ansprüche 1 bis 8, **dadurch gekennzeichnet, dass** die Rückstellvorrichtung (6) für die Verschlussklappe (4) ein in Einsteckrichtung (A) mit einer Federkraft beaufschlagtes Schubelement (6.1) umfasst.

10. Steckerteil gemäss einem der Ansprüche 1 bis 9, **dadurch gekennzeichnet, dass** der Steckereinsatz (11) zur Aufnahme von mehreren, insbesondere von vier, Steckerstiften (12) ausgebildet ist, und vorzugsweise mehrere Steckerstifte (12), bevorzugt vier, im Steckereinsatz (11) angeordnet sind, wobei bevorzugt bei gerader Anzahl von Steckerstiften (12) die Steckerstifte (12) hälftig als männliche und hälftig als weibliche Steckerstifte (12) ausgebildet sind.

11. Steckerteil gemäss einem der Ansprüche 1 bis 10, **dadurch gekennzeichnet, dass** das Steckerteil (1) zum Verschluss einer Einstecköffnung (22.1) des Buchsenteils (20) ausgebildetes Abschlussmittel (7) aufweist, wobei bevorzugt ein Dichtelement (7.1) am Abschlussmittel (7) derart angeordnet ist, dass die Einstecköffnung (22.1) des Buchsenteils (20) durch das Abschlussmittel (7) gegen Schmutz und/oder Feuchtigkeit abdichtbar ist.

12. Steckerteil gemäss Anspruch 11, **dadurch gekennzeichnet, dass** die Verriegelungsvorrichtung (8) vollständig in einem Bereich, welcher bezüglich der Einsteckrichtung (A) hinter dem Abschlussmittel (7) liegt, am Steckerteil (1) angeordnet ist.

13. Steckerteil gemäss einem der Ansprüche 1 bis 12, **dadurch gekennzeichnet, dass** ein Kodierungsmittel (10) vorhanden ist, welches mit Kodierungsmitteln (26) am Buchsenteil (20) zusammenwirken kann, wobei das Kodierungsmittel (10), bevorzugt an einer Unterseite, am Entriegelungsmittel (9) ausgebildet ist und insbesondere in Einsteckrichtung (A) ausgerichtete Rippen und oder Nuten umfasst.

14. Steckverbindung, insbesondere für optische Leiter, umfassend ein Steckerteil (1) gemäss einem der Ansprüche 1 bis 13 und ein Buchsenteil (20), wobei das Buchsenteil (20)
a) ein Buchsengehäuse (21) mit einem Aufnahmeraum (22) für ein Steckerteil (1) gemäss einem der Ansprüche 1 bis 13 umfasst, in welchen das Steckerteil (1) durch eine Einstecköffnung (22.1) in einer Einsteckrichtung (A) einbringbar ist und
b) das Buchsenteil (20) Steuerungsmittel (21.7, 21.9) zum Zusammenwirken mit der Schutzvorrichtung des Steckerteils (1) aufweist, durch welche die Schutzvorrichtung beim Einstecken von der Schliessposition in die Öffnungsposition bewegbar ist, welche Steuerungsmittel (21.7, 21.9) insbesondere im Aufnahmeraum (22) ausgebildet sind,
wobei
das Buchsenteil (20) Rastmittel (21.3) zur Verrastung der Verriegelungsmittel (8) des Steckerteils (1) aufweist, wobei das Rastmittel (21.3) als wenigstens eine Aussparung (21.3) in einer Seitenwand (21.2) des Buchsengehäuses (20) ausgebildet ist, in welche ein freies Rastende wenigstens einer Rastzunge (8.4) oder gegebenenfalls eines Rastvorsprungs (8.1) der Verriegelungsmittel (8) des Steckerteils (1) beim Einstecken des Steckerteils (1) einbringbar ist,
wobei die Verschlussklappe des Steckerteils (1) beim Einstecken in die erste Öffnungsposition bewegbar ist und wobei beim Abziehen des Steckerteils (1) die Verschlussklappe des Steckerteils (1) automatisch in die Schliessposition bringbar ist.

15. Steckverbindung gemäss Anspruch 14, **dadurch gekennzeichnet, dass** am Buchsenteil (20) ein Kodierungsmittel (26) vorhanden ist, wobei das Kodierungsmittel (26) auswechselbar am Buchsenteil (20) befestigt ist, insbesondere als Teil einer Gehäusewand des Buchsengehäuses (20) ausgebildet und in einer entsprechenden Ausnehmung, vorzugsweise über eine Schnappvorrichtung, in der Gehäusewand des Buchsengehäuses (20) befestigt ist.

16. Steckverbindung gemäss einem der Ansprüche 14 bis 15,
**dadurch gekennzeichnet, dass** am Buchsenteil (20) ein Verschlussmittel (27), insbesondere eine Verschlussklappe (27), ausgebildet ist, welches über ein in einer Führungskulisse (21.10) des Buchsenteils (20) geführtes Führungselement (27.1) schwenkbar und/oder verschiebbar am Buchsenteil (20) gelagert ist, und in eine Schliessposition bewegbar ist, in welcher das Verschlussmittel (27) die Einstecköffnung (22.1) verschliesst und in eine Öffnungsposition bewegbar ist, in welcher das Verschlussmittel (27) in einen entsprechend ausgebildeten Aufnahmeraum (21.11) des Buchsenteils (20) eingebracht ist.

17. Steckverbindung gemäss einem der Ansprüche 14 bis 16, **dadurch gekennzeichnet, dass** bei vollständig in den Aufnahmeraum (22) eingebrachtem Steckerteil (1) das Entriegelungsmittel (9) zumindest teilweise zwischen Steckergehäuse (2) und einer Seitenwand (21.2) des Buchsenteils (20) angeordnet ist, wobei bevorzugt das Verriegelungsmittel (8), insbesondere mit dem freien Rastende der Rastzunge (8.4), durch die Ausnehmung (9.2) des Entriegelungsmittels (9), welche insbesondere in einer Seitenwand des als Schiebehülse (9.1) ausgebildeten Entriegelungsmittels (9) ausgebildet ist, hindurch ragt und verrastend in das, bevorzugt als Aussparung (21.3) in einer Seitenwand (21.2) des Buchsenteils (20) ausgebildete, Rastmittel (21.2) des Buchsenteils (20) eingreift.

## Claims

1. Plug part (1) for a plug connection, in particular an optical conductor, comprising
a) a plug housing (2) in which a plug insert (11) with at least one plug pin (12) for receiving a conductor, in particular an optical conductor, is arranged, wherein
b) the plug part (1) can be inserted into a correspondingly designed socket part (20) in an insertion direction (A), and
c) a locking means (8) for releasably locking the plug part (1) in the socket part (20) and further comprising
d) has an unlocking means (9) via which the locking of the locking means (8) on the socket part (20) can be released, wherein
e) the plug part (1) comprises a protective device for protecting the end face of the plug pin (12), which protective device can be moved from a closed position with the end face covered into a first open position with the end face exposed, and
f) the protective device can be moved from the closed position to the first open position by inserting the plug part (1) into the socket part (20) by interacting with the socket part (20),
wherein the unlocking means (9) is mounted on the plug housing (1) so as to be displaceable substantially along the insertion direction (A), wherein the unlocking means (9) can co-operate with the locking means (8) in such a way that when the unlocking means (9) is displaced longitudinally with respect to the plug housing (1) substantially in the direction opposite to the insertion direction (A), a locking action achieved by the locking means can be released,
wherein the protective device comprises a closure flap (4) which, in the closed position, can be pressed against the plug housing (2) as a closure of an end face opening of an interior space (3) of the plug housing (2), wherein the plug insert (11) with the at least one plug pin (12) accommodated therein is arranged in the interior space (3),
wherein the closure flap (4) is pivotably and displaceably mounted on the plug part (1) via a guide element (4.2) guided in a guide link (2.2) of the plug part (1),
wherein, in the first opening position, the closure flap (4) is aligned largely parallel to a side surface of the plug housing (2), referred to as the upper side, and is arranged displaced rearwards with respect to the plug housing (2),
**characterised in that**
the plug part (1) comprises a return device (6) for the closure flap (4), wherein the return device (6) co-operates with the closure flap (4) in such a way that the closure flap (4) can be returned from the first open position to the closed position in the absence of external forces,
whereby the protective device can be brought into a second opening position, in which the protective device remains in the absence of external forces,
wherein, in the case of the second opening position, the return device (6) locks the closure flap (4) when it is in the second opening position,
whereby the first opening position is different from the second opening position,
whereby the second opening position can be reached by essentially just swivelling from the closing position,
wherein the protective device is designed in such a way that the intended interaction with the socket part prevents the protective device from reaching the second opening position during insertion or removal.

2. Plug part according to claim 1, **characterised in that** the locking means (8) has at least one latching tongue (8.4), in particular made of metal, which is fastened to the plug housing (2) with a fastening section and has a free latching end which preferably extends forwards in the insertion direction (A) and advantageously has a latching projection (8.1) which is directed away from the plug housing (2).

3. Plug part according to claim 2, **characterised in that** the unlocking means (9) and the at least one latching tongue (8.4) are designed and interact in such a way that the latching end can be moved towards the plug housing (2) by displacing the unlocking means (9) with respect to the plug housing (2) against the insertion direction.

4. Plug part according to one of claims 2 or 3, **characterised in that** the locking means (8) comprises a U-shaped bracket (8.3) fixedly attached to the plug housing in the insertion direction (A), in particular made of metal, which has two largely identical latching tongues (8.4), each with a free latching end, wherein the U-shaped bracket (8.3) preferably at least partially embraces the plug housing (2) and, in particular, the two latching tongues (8.4) on opposite sides of the plug housing (2) extend forwards with their free latching ends in the insertion direction (A).

5. Plug part according to one of claims 1 to 4, **characterised in that** the unlocking means (9) is designed as a sliding sleeve (9.1) which completely or partially embraces the plug housing (2), wherein optionally the at least one latching tongue (8.4) is arranged between the sliding sleeve (9.1) and the plug housing (2) and protrudes outwards with its latching end at least partially through a recess (9.2) formed in a side wall of the sliding sleeve (9.1), essentially transversely to the insertion direction (A), the latching projection (8.1) formed on the latching tongue (8.4) protruding outwards if necessary.

6. Plug part according to one of claims 1 to 5, **characterised in that** the unlocking means (9) is supported on the plug housing (2) in a spring-loaded manner in the insertion direction (A) via a stop (2.6), the stop (2.6) preferably being attached to the plug housing as a separate component and being removable if necessary.

7. Plug part according to one of claims 1 to 6, **characterised in that** the closure flap (4) is designed as a cap which, in the closed position, can be pressed against the plug housing (2) as a closure of an end face opening of an interior space (3) of the plug housing (2), wherein a sealing element (4.6) is present which seals the closure against dirt and/or moisture.

8. Plug part according to one of claims 1 to 7, **characterised in that** the guide link (2.2) has sections which are offset relative to one another with respect to the guide direction, so that the closure flap (4) can be moved, preferably under positive control, at least in the region of the guide element (4.2) towards or away from the plug housing (2) during displacement.

9. Plug part according to one of claims 1 to 8, **characterised in that** the return device (6) for the closure flap (4) comprises a thrust element (6.1) acted upon by a spring force in the insertion direction (A).

10. Plug part according to one of claims 1 to 9, **characterised in that** the plug insert (11) is designed to receive several, in particular four, plug pins (12), and preferably several plug pins (12), preferably four, are arranged in the plug insert (11), preferably with an even number of plug pins (12), half of the plug pins (12) being designed as male and half as female plug pins (12).

11. Plug part according to one of claims 1 to 10, **characterised in that** the plug part (1) has closing means (7) designed to close an insertion opening (22.1) of the socket part (20), wherein preferably a sealing element (7.1) is arranged on the closing means (7) in such a way that the insertion opening (22.1) of the socket part (20) can be sealed against dirt and/or moisture by the closing means (7).

12. Plug part according to claim 11, **characterised in that** the locking means (8) is completely arranged on the plug part (1) in a region which lies behind the closing means (7) with respect to the insertion direction (A).

13. Plug part according to one of claims 1 to 12, **characterised in that** a coding means (10) is present, which can interact with coding means (26) on the socket part (20), wherein the coding means (10) is formed, preferably on an underside, on the unlocking means (9) and in particular comprises ribs and or grooves aligned in the insertion direction (A).

14. Plug connection, in particular for optical conductors, comprising a plug part (1) according to one of claims 1 to 13 and a socket part (20), wherein the socket part (20)
a) a socket housing (21) with a receiving space (22) for a plug part (1) according to one of claims 1 to 13, into which the plug part (1) can be inserted through an insertion opening (22.1) in an insertion direction (A), and
b) the socket part (20) has control means (21.7, 21.9) for co-operating with the protective device of the plug part (1), by means of which the protective device can be moved from the closed position into the open position during insertion, which control means (21.7, 21.9) are formed in particular in the receiving space (22),
whereby
the socket part (20) has latching means (21.3) for latching the locking means (8) of the plug part (1), wherein the latching means (21.3) is formed as at least one recess (21.3) in a side wall (21.2) of the socket housing (20), into which a free latching end of at least one latching tongue (8.4) or possibly a latching projection (8.1) of the locking means (8) of the plug part (1) can be inserted when the plug part (1) is plugged in,
wherein the closing flap of the plug part (1) can be moved into the first open position when the plug part (1) is inserted and wherein the closing flap of the plug part (1) can be automatically brought into the closed position when the plug part (1) is removed.

15. Plug-in connection according to claim 14, **characterised in that** a coding means (26) is present on the socket part (20), the coding means (26) being replaceably fastened to the socket part (20), in particular being formed as part of a housing wall of the socket housing (20) and being fastened in a corresponding recess, preferably via a snap-in device, in the housing wall of the socket housing (20).

16. Plug-in connection according to one of claims 14 to 15, **characterised in that** a closure means (27), in particular a closure flap (27), is formed on the socket part (20), which closure means is mounted on the socket part (20) so as to be pivotable and/or displaceable via a guide element (27.1) guided in a guide link (21.10) of the socket part (20), and can be moved into a closing position in which the closure means (27.1), which is pivotably and/or displaceably mounted on the socket part (20), and is movable into a closing position, in which the closing means (27) closes the insertion opening (22.1) and is movable into an opening position, in which the closing means (27) is introduced into a correspondingly formed receiving space (21.11) of the socket part (20).

17. Plug connection according to one of claims 14 to 16, **characterised in that** when the plug part (1) is completely inserted into the receiving space (22), the unlocking means (9) is arranged at least partially between the plug housing (2) and a side wall (21.2) of the socket part (20), wherein preferably the locking means (8), in particular with the free latching end of the latching tongue (8.4), protrudes through the recess (9.2) of the unlocking means (9), which is formed in particular in a side wall of the unlocking means (9) designed as a sliding sleeve (9.1), and engages in a latching manner in the latching means (21.2) of the socket part (20), which is preferably designed as a recess (21.3) in a side wall (21.2) of the socket part (20).

## Revendications

1. Partie de connecteur (1) pour une connexion enfichable, en particulier pour des conducteurs optiques, comprenant
a) un boîtier de connecteur (2), dans lequel est disposé un insert de connecteur (11) avec au moins une broche de connecteur (12) pour recevoir un conducteur, en particulier un conducteur optique, dans lequel
b) la partie de connecteur (1) peut être enfichée dans une partie de douille (20) de forme correspondante dans une direction d'enfichage (A) et
c) un moyen de verrouillage (8) pour verrouiller de manière libérable la partie de connecteur (1) dans la partie de douille (20), et en outre
d) un moyen de déverrouillage (9) par lequel le verrouillage du moyen de verrouillage (8) sur la partie de douille (20) peut être libéré, dans lequel
e) la partie de connecteur (1) comprend un dispositif de protection pour protéger la face frontale de la broche de connecteur (12), lequel dispositif de protection peut être déplacé d'une position de fermeture avec une face frontale cachée dans une première position d'ouverture avec une face frontale exposée et
f) le dispositif de protection peut être déplacé de la position de fermeture à la première position d'ouverture en insérant la partie de connecteur (1) dans la partie de douille (20) par coopération avec la partie de douille (20),
le moyen de déverrouillage (9) étant monté sur le boîtier de connecteur (1) de manière à pouvoir être déplacé essentiellement le long de la direction d'enfichage (A), le moyen de déverrouillage (9) pouvant coopérer avec le moyen de verrouillage (8) de telle sorte que, lors d'un déplacement longitudinal du moyen de déverrouillage (9) par rapport au boîtier de connecteur (1), essentiellement dans la direction opposée à la direction d'enfichage (A), un verrouillage obtenu par le moyen de verrouillage peut être libéré,
le dispositif de protection comprenant un volet de fermeture (4) qui, dans la position de fermeture, peut être pressé contre le boîtier de connecteur (2) en tant que fermeture d'une ouverture frontale d'un espace intérieur (3) du boîtier de connecteur (2), l'insert de connecteur (11) étant disposé dans l'espace intérieur (3) avec la au moins une broche de connecteur (12) qui y est logée,
le volet de fermeture (4) étant monté sur la partie de connecteur (1) de manière à pouvoir pivoter et coulisser par l'intermédiaire d'un élément de guidage (4.2) guidé dans une coulisse de guidage (2.2) de la partie de connecteur (1),
dans lequel, dans la première position d'ouverture, le volet de fermeture (4) est orienté en grande partie parallèlement à une surface latérale, appelée face supérieure, du boîtier de connecteur (2) et est disposé de manière décalée vers l'arrière par rapport au boîtier de connecteur (2),
**caractérisé en ce que**
la partie de connecteur (1) comprend un dispositif de rappel (6) pour le volet de fermeture (4), le dispositif de rappel (6) coopérant avec le volet de fermeture (4) de telle sorte que le volet de fermeture (4) puisse être ramené de la première position d'ouverture à la position de fermeture en l'absence de forces extérieures,
le dispositif de protection pouvant être amené dans une deuxième position d'ouverture, dans laquelle le dispositif de protection reste en l'absence de forces extérieures,
dans le cas de la deuxième position d'ouverture, le dispositif de rappel (6) bloque le volet de fermeture (4) lorsque celui-ci est dans la deuxième position d'ouverture,
la première position d'ouverture étant différente de la deuxième position d'ouverture,
la deuxième position d'ouverture pouvant être atteinte par un pivotement essentiellement pur à partir de la position de fermeture,
le dispositif de protection étant conçu de telle sorte que la coopération prévue avec la partie de douille lors de l'enfichage ou du retrait empêche le dispositif de protection d'arriver dans la deuxième position d'ouverture.

2. Partie de connecteur selon la revendication 1, **caractérisé en ce que** le moyen de verrouillage (8) présente au moins une languette d'encliquetage (8.4), en particulier en métal, qui est fixée par une section de fixation au boîtier de connecteur (2) et présente une extrémité d'encliquetage libre qui s'étend de préférence vers l'avant dans la direction d'insertion (A) et présente avantageusement une saillie d'encliquetage (8.1) qui est orientée à l'opposé du boîtier de connecteur (2).

3. Partie de connecteur selon la revendication 2, **caractérisé en ce que** le moyen de déverrouillage (9) et l'au moins une languette d'encliquetage (8.4) sont réalisés et coopèrent de telle sorte que, par déplacement du moyen de déverrouillage (9) par rapport au boîtier de connecteur (2) dans le sens contraire à la direction d'enfichage, l'extrémité d'encliquetage peut être déplacée vers le boîtier de connecteur (2).

4. Partie de connecteur selon l'une des revendications 2 ou 3, **caractérisé en ce que** le moyen de verrouillage (8) comprend un étrier en forme de U (8.3), notamment en métal, fixé de manière stationnaire sur le boîtier du connecteur dans la direction d'insertion (A), lequel comprend deux languettes d'encliquetage (8.4) avec chacune une extrémité d'encliquetage libre, l'étrier en forme de U (8.3) entourant de préférence partiellement le boîtier de connecteur (2) au moins et les deux languettes d'encliquetage (8.4) s'étendant en particulier sur des côtés opposés du boîtier de connecteur (2) avec leurs extrémités d'encliquetage libres vers l'avant dans la direction d'insertion (A).

5. Partie de connecteur selon l'une des revendications 1 à 4, **caractérisé en ce que** le moyen de déverrouillage (9) est réalisé sous la forme d'un manchon coulissant (9.1) qui entoure entièrement ou partiellement le boîtier de connecteur (2), l'au moins une languette d'encliquetage (8.4) étant éventuellement placée entre le manchon coulissant (9.1) et le boîtier de connecteur (2) et fait saillie vers l'extérieur avec son extrémité d'encliquetage au moins partiellement à travers un évidement (9.2) formé dans une paroi latérale du manchon coulissant (9.1), essentiellement transversalement à la direction d'enfichage (A), la saillie d'encliquetage (8.1) formée sur la languette d'encliquetage (8.4) faisant éventuellement saillie vers l'extérieur.

6. Partie de connecteur selon l'une des revendications 1 à 5, **caractérisée en ce que** le moyen de déverrouillage (9) est appuyé de manière élastique sur le boîtier de connecteur (2) par l'intermédiaire d'une butée (2.6) en étant précontraint dans la direction d'insertion (A), la butée (2.6) étant de préférence fixée sur le boîtier de connecteur en tant que composant séparé et, si nécessaire, de manière amovible.

7. Partie de connecteur selon l'une des revendications 1 à 6, **caractérisé en ce que** le volet de fermeture (4) est réalisé sous la forme d'un capuchon qui, en position de fermeture, peut être pressé contre le boîtier de connecteur (2) en tant que fermeture d'une ouverture frontale d'un espace intérieur (3) du boîtier de connecteur (2), un élément d'étanchéité (4.6) étant présent, lequel rend la fermeture étanche à la saleté et/ou à l'humidité.

8. Partie de connecteur selon l'une des revendications 1 à 7, **caractérisé en ce que** la coulisse de guidage (2.2) présente des sections décalées les unes par rapport aux autres par rapport à la direction de guidage, de sorte que le volet de fermeture (4) peut être déplacé lors du coulissement, de préférence par commande forcée, au moins dans la zone de l'élément de guidage (4.2) vers le boîtier de connecteur (2) ou en s'éloignant de celui-ci.

9. Partie de connecteur selon l'une des revendications 1 à 8, **caractérisée en ce que** le dispositif de rappel (6) pour le volet de fermeture (4) comprend un élément de poussée (6.1) sollicité par une force élastique dans la direction d'insertion (A).

10. Partie de connecteur selon l'une des revendications 1 à 9, **caractérisé en ce que** l'insert de connecteur (11) est conçu pour recevoir plusieurs, en particulier quatre, broches de connecteur (12), et de préférence plusieurs broches de connecteur (12), de préférence quatre, sont disposées dans l'insert de connecteur (11), de préférence, pour un nombre pair de broches de connecteur (12), les broches de connecteur (12) étant conçues pour moitié comme des broches de connecteur mâles et pour moitié comme des broches de connecteur femelles (12).

11. Partie de connecteur selon l'une des revendications 1 à 10, **caractérisé en ce que** l'élément de fiche (1) présente un moyen de fermeture (7) conçu pour fermer une ouverture d'enfichage (22.1) de la partie de douille (20), un élément d'étanchéité (7.1) étant de préférence disposé sur le moyen de fermeture (7) de telle sorte que l'ouverture d'enfichage (22.1) de la partie de douille (20) puisse être rendue étanche à la saleté et/ou à l'humidité par le moyen de fermeture (7).

12. Partie de connecteur selon la revendication 11, **caractérisée en ce que** le moyen de verrouillage (8) est entièrement disposé sur la partie de connecteur (1) dans une zone qui se trouve derrière le moyen de terminaison (7) par rapport à la direction d'insertion (A).

13. Partie de connecteur selon l'une des revendications 1 à 12, **caractérisée en ce qu'**il existe un moyen de codage (10) apte à coopérer avec des moyens de codage (26) sur la partie de douille (20), le moyen de codage (10) étant formé, de préférence sur une face inférieure, sur le moyen de déverrouillage (9) et comprenant notamment des nervures et/ou des rainures orientées dans la direction d'enfichage (A).

14. Connecteur, en particulier pour des conducteurs optiques, comprenant une partie de connecteur (1) selon l'une des revendications 1 à 13 et une partie de douille (20), dans lequel la partie de douille (20)
a) comprend un boîtier de prise (21) avec un espace de réception (22) pour une partie de connecteur (1) selon l'une des revendications 1 à 13, dans lequel la partie de connecteur (1) peut être introduite par une ouverture d'insertion (22.1) dans une direction d'insertion (A) et
b) la partie de douille (20) présente des moyens de commande (21.7, 21.9) pour coopérer avec le dispositif de protection de la partie de connecteur (1), par lesquels le dispositif de protection peut être déplacé lors de l'enfichage de la position de fermeture dans la position d'ouverture, lesquels moyens de commande (21.7, 21.9) sont réalisés en particulier dans l'espace de réception (22),
où
la partie douille (20) présente des moyens d'encliquetage (21.3) pour l'encliquetage des moyens de verrouillage (8) de la partie de connecteur (1), le moyen d'encliquetage (21.3) se présentant sous la forme d'au moins un évidement (21.3) dans une paroi latérale (21.2) du boîtier de douille (20), dans lequel une extrémité d'encliquetage libre d'au moins une languette d'encliquetage (8.4) ou le cas échéant d'une saillie d'encliquetage (8.1) des moyens de verrouillage (8) de la partie mâle (1) peut être introduite lors de l'enfi-chage de la partie de connecteur (1),
le clapet de fermeture de la partie de connecteur (1) pouvant être déplacé dans la première position d'ouverture lors de l'enfichage et le clapet de fermeture de la partie de connecteur (1) pouvant être amené automatiquement dans la position de fermeture lors du retrait de la partie de connecteur (1).

15. Connexion enfichable selon la revendication 14, **caractérisée en ce qu'**un moyen de codage (26) est présent sur la partie de douille (20), le moyen de codage (26) étant fixé de manière interchangeable sur la partie de douille (20), étant réalisé en particulier comme partie d'une paroi de boîtier du boîtier de douille (20) et étant fixé dans un évidement correspondant, de préférence par un dispositif d'encliquetage, dans la paroi de boîtier du partie de douille (20).

16. Connexion enfichable selon l'une des revendications 14 à 15, **caractérisée en ce qu'**un moyen de fermeture (27), en particulier un volet de fermeture (27), est formé sur la partie de douille (20), lequel est déplacé et fixé par un élément de guidage (27.10) guidé dans une coulisse de guidage (21.10) de la partie de douille (20) et peut être déplacé dans une position de fermeture dans laquelle le moyen de fermeture (27) ferme l'ouverture d'insertion (22.1) et peut être déplacé dans une position d'ouverture dans laquelle le moyen de fermeture (27) est inséré dans un espace de réception (21.11) de forme correspondante de la partie de douille (20).

17. Connexion selon l'une des revendications 14 à 16, **caractérisée en ce que**, lorsque la partie de connecteur (1) est entièrement insérée dans l'espace de réception (22), le moyen de déverrouillage (9) est disposé au moins partiellement entre le boîtier de connecteur (2) et une paroi latérale (21.2) de la partie de douille (20), le moyen de verrouillage (8), en particulier avec l'extrémité d'encliquetage libre de la languette d'encliquetage (8.4), traverse l'évidement (9.2) du moyen de déverrouillage (9), qui est formé en particulier dans une paroi latérale du moyen de déverrouillage (9) réalisé sous la forme d'une manchon coulissant (9.1), et s'engage par encliquetage dans le moyen d'encliquetage (21.2) de la partie de douille (20), réalisé de préférence sous la forme d'un évidement (21.3) dans une paroi latérale (21.2) de la partie de douille (20).
